(19) **Europäisches Patentamt**
**European Patent Office**
**Office européen des brevets**

(11) **EP 4 359 954 B1**

(12) **EUROPEAN PATENT SPECIFICATION**

(45) Date of publication and mention
of the grant of the patent:
**29.01.2025 Bulletin 2025/05**

(21) Application number: **23717270.5**

(22) Date of filing: **09.03.2023**

(51) International Patent Classification (IPC):
*G06F 16/27* (2019.01)    *H04L 9/40* (2022.01)
*G06F 21/57* (2013.01)    *H04L 9/00* (2022.01)
*H04L 9/32* (2006.01)    *H04L 9/08* (2006.01)

(52) Cooperative Patent Classification (CPC):
**G06F 21/572; H04L 9/0891; H04L 9/3263;
H04L 9/50; H04L 63/12;** H04L 63/0442

(86) International application number:
**PCT/JP2023/010206**

(87) International publication number:
**WO 2024/004286 (04.01.2024 Gazette 2024/01)**

(54) **SYSTEMS AND METHODS FOR BLOCKCHAIN-BASED INDUSTRIAL AUTOMATION**

SYSTEME UND VERFAHREN FÜR BLOCKCHAIN-BASIERTE INDUSTRIELLE
AUTOMATISIERUNG

SYSTÈMES ET PROCÉDÉS D'AUTOMATISATION INDUSTRIELLE BASÉE SUR UNE CHAÎNE DE
BLOCS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.06.2022 US 202217809255**

(43) Date of publication of application:
**01.05.2024 Bulletin 2024/18**

(73) Proprietor: **Mitsubishi Electric Corporation
Tokyo 100-8310 (JP)**

(72) Inventors:
• **CHIU, Tsz-Chun Michael
Cambridge, Massachusetts 02139-1955 (US)**
• **GOLDSMITH, Abraham
Cambridge, Massachusetts 02139-1955 (US)**
• **KALABIC, Uros
Cambridge, Massachusetts 02139-1955 (US)**

(74) Representative: **Pfenning, Meinig & Partner mbB
Patent- und Rechtsanwälte
Theresienhöhe 11a
80339 München (DE)**

(56) References cited:
• **BOZIC NIKOLA: "Blockchain technologies and
their application to secure virtualized
infrastructure control", 18 October 2019
(2019-10-18), pages 1 - 165, XP055880809,
Retrieved from the Internet <URL:https://tel.
archives-ouvertes.fr/tel-03337153/document>
[retrieved on 20220118]**
• **FERNANDO PRAVEEN ET AL: "Blockchain-
Powered Software Defined Network-Enabled
Networking Infrastructure for Cloud
Management", 2020 IEEE 17TH ANNUAL
CONSUMER COMMUNICATIONS &
NETWORKING CONFERENCE (CCNC), IEEE, 10
January 2020 (2020-01-10), pages 1 - 6,
XP033745385, DOI: 10.1109/
CCNC46108.2020.9045378**

**Description**

[Technical Field]

The present disclosure relates generally to industrial systems, and more particularly to methods and systems for implementing blockchain based automation in industrial systems.

[Background Art]

An industrial system is an environment constituting several components, such as machines, tools, field devices, personnel, support equipment, raw material, goods, and the like, which are related to each other by industrial processes. The industrial processes are related to control, production, transportation, monitoring, operation, maintenance and testing of machines and equipment in the industrial environment, with an objective of achieving an industrial goal. The industrial goal may be related to product manufacturing, product transportation, energy generation, process control, process operation, goods transportation, and the like. Many of these industrial goals and processes are automated using computing devices in modern day industrial automation systems. To that end, the industrial automation systems comprise the use of computing devices for operating various machines and processes in an industrial system, so as to reduce human intervention and to increase efficiency of repetitive tasks by automating them using computing. Industrial automation is used in almost industries these days, such as in petroleum industry, FMCG sector, textile industry, manufacturing or production plants, chemical plants, pharmaceutical industry, paper industry, and the like.

In these industries, industrial automation involves automating process control and machine control functions that are performed using a set of computing devices. The processes and control are related to different types of equipment present in an industry, which include one or a combination of industrial devices or field devices such as sensors, actuators, valves, pumps, pipes, and the like; machines and tools; plant control equipment; temperature and humidity control equipment; logistic and transportation equipment, and the like. Each type of equipment performs a function which forms an industrial process. Such an industrial process needs control and monitoring, which is done using specialized computing devices used in industries. Once such type of device is a programmable logic controller (PLC).

PLCs are industrial digital computers that are used in controlling manufacturing and plant control processes. A PLC generally consists of the following components: a CPU module, an I/O module, and a backplane. The CPU module consists of a Central Processing Unit (CPU), Read-Only Memory (ROM), and Random-Access Memory (RAM). The CPU is the computational unit that executes computer instructions that computer programs and operating systems consist of. ROM is a type of non-volatile memory that is able to store its content even in the event of a power disruption. This is in contrast to RAM, where the contents are lost when the power is turned off. ROM, in PLCs, are generally used to store the OS and its associated state. This is due to the requirements of industrial applications, where power disruptions are more frequent, yet the industrial process must resume operation from where it last left off before the disruption. However, this can also be a source of security risk since restarts do not flush the system state. Further, I/O modules are components that enable the PLC to interface with other devices that include but are not limited to: sensors, switches, network connections, and other PLCs. To that end, the I/O modules enable the modularity of function in PLCs. Additionally, the backplane of the PLC is the bus that enables the communication between the CPU and the I/O modules.

PLCs differ from commercial computers in that PLCs are ruggedized, hard real time systems, where outputs responding to inputs must be produced within a limited time for the system to be considered operating correctly. That is why, PLCs are integral components of a control layer in industrial automation systems. Efficient operation of PLCs is thus a direct parameter for implementing an efficient industrial automation solution. At the same time, secure operation of PLCs is important to ensure smooth, reliable, and error-free operation of critical and non-critical industrial functions.

In some industrial automation systems, PLCs are further connected to a second level of computing devices, which provide an interface for the PLCs to connect to the outside world. Even though such a connection is advantageous for providing better avenues for efficient monitoring, analytics of industrial processes and inter-industry or intra-industry collaborations, but at the same such interfacing exposes the industrial system to many security vulnerabilities, threats, manipulation attempts and overall industrial process disruption scenarios. This can lead to very serious consequences, specifically for critical industries like petrochemicals, energy, power plants and the like. To that end, it is desirable to provide a secure and trusted interface for the industrial automation systems to connect to the outside world.

Accordingly, there is a need for an efficient system for controlling the operation of various processes and equipment in an industrial automation system, while the same time providing security and smooth running of industrial processes.

Bozic, Nikola: "Blockchain technologies and their application to secure virtualized infrastructure control", 18 October 2019 discusses the application of blockchain technologies to secure virtualized infrastructure control.

Fernando, Praveen et. al.: "Blockchain-Powered Software Defined Network-Enabled Networking Infrastructure for Cloud Management", 2020 IEEE 17th Annual Consumer Communications & Networking Conference, 10 January 2020, describes exploiting software-defined networking and blockchain technologies to secure cloud management platforms from a networking perspective.

[Summary of Invention]

The appended claims define the scope of protection. Any examples and technical descriptions of apparatuses, products and/or methods in the description and/or drawings not covered by the claims are presented not as embodiments of the invention but as background art or examples useful for understanding the invention.

Recently, blockchain technology has gained a lot of prominence as one of the safest and most trusted computing and networking technologies, due to its decentralized architecture and dependence on robust trust and security mechanisms. A blockchain network represents a digital ledger, which is a record of transactions stored in a computer. Transactions represent changes in the state of a system. Thus, digital ledgers represent the state of a system such as a financial system, an industrial system, a medical system, an educational system, and the like.

Digital ledgers can be implemented in a centralized system that keeps a record of all the transactions and changes to this record without requiring that another system agree with its own record and without producing an auditable trail of changes made by the centralized system. Another method is a decentralized or distributed method that allows to keep a record of transactions and implements a method of determining a consensus between multiple systems. This is useful because it creates a disincentive for any particular system, comprising the distributed system, to act in a selfish manner and change the digital ledger in a way that compromises the distributed system. This in itself can increase user trust in the distributed system and for that reason can be useful. Blockchain network is based on such a decentralized digital ledger system.

A blockchain is an append-only data structure consisting of blocks linked together using a linked list structure or similar. A block is a container for digital information, consisting of a header, metadata, and a list of transactions. The header and metadata can contain information about a software version, cryptographic hashes used to compress the amount of data required for storage, timestamps and so on. The transactions are a list of all transactions of a digital token and may potentially be hashed to reduce the amount of data required for storage. The block lists all transactions from one user to another. Transactions between users are implemented via transactions between the users' corresponding digital addresses.

Transactions in distributed ledgers are most often implemented using two models: the transaction output (UTXO) model and the account model. In the UTXO model, transactions have inputs and outputs. In the account model, transactions are messages, i.e., a list of key value pairs. One point of difference between the UTXO models and the account models is that UTXO models are stateless in that the system state must be built from a genesis block (originating block). The account model is more flexible than the UTXO model, but is more expensive in terms of computational requirements, as it requires increased difficulty in proving system correctness. To that end, the computing requirements may be measured in terms of computing resources, such as power, processing capability, storage, and operating system requirements.

Operating systems broadly follow two architectures: monolithic kernels and unikernels. Monolithic kernels are operating systems where high-level virtual interfaces known as systems calls are provided, as an API, over the underlying computer hardware. Monolithic kernels have the dual purpose of freeing the programmer of the need to worry about the low-level details of the underlying hardware and to provide security to the system by ensuring that processes that run on top of the kernel do not interfere with other processes or the kernel itself. Examples of monolithic kernels include the major operating systems such as Linux and OpenBSD. Unikernels, in contrast, are specialized machine images where the application is linked against needed kernel functionality in the form of libraries. Examples of unikernels include MirageOS, u-root, and Linux Kernel Library (LKL). Unikernels are more lightweight and performant than monolithic kernels due to their specialized nature.

Some embodiments are based on the realization that unikernels provide functionalities to implement application specific programming and logic, which can be used to implement lightweight blockchain-integrated clients. To that end, the lightweight clients can be associated with computing systems that have limited processing and storage capabilities, and are more application oriented rather than computing oriented, such as special purpose computing devices used in industrial automation systems. One such type of special purpose computing device which has been discussed earlier are the PLCs.

Some embodiments are based on the realization, that the security requirements of the PLCs, as discussed earlier, can be met by integrating PLCs with blockchain, since blockchain is one of the most secure computing technologies available today. However, one drawback of blockchain based systems is their large computing and storage requirements.

Some embodiments are further based on the realization, that the limitations of blockchain based systems can be overcome by integrating unikernels in blockchain based systems, to implement lightweight clients, such as PLCs.

To that end, some embodiments disclosed herein provide an industrial automation system with a blockchain-based common runtime for PLCs through the introduction of a blockchain-integrated unikernel for PLCs. A key realization in implementing such an industrial automation system solution is that a common blockchain-integrated layer can protect the privacy and intellectual property of various users in the industrial automation system and also guarantee an immutable audit trail of the operations within the industrial automation system.

To that end, some embodiments provide a cryptographic technology that allows for verification of whether or not a computation was done on the PLCs, that act as lightweight blockchain clients implementing the verification.

Some embodiments are further based on the realization, that implementation of such a solution does not require these lightweight blockchain clients to download the entire blockchain, which would have been too computationally and storage expensive. Instead, the lightweight blockchain client with an initial blockchain state only needs to download the most recent block and an associated cryptographic certificate from the blockchain, to prove that a state transition associated with the computation done on the PLCs is valid or verified, that is to say, that the current block can be reached from a previous block.

To that end, some embodiments provide a blockchain based industrial automation system implementing such a lightweight controller computer, that is the PLC, having associated with it at least one processor or CPU for performing the aforesaid verification. The blockchain based industrial automation system industrial provides a trusted and distributed source of truth for the entire industrial automation system where PLCs and other devices at the control level or above are able to read and write to the blockchain.

To that end, a blockchain network associated with the blockchain based industrial automation system includes data necessary for industrial automation contexts such as, but not limited to, firmware updates for the PLCs, controller functionality for the PLC, a record of the commands sent to the PLC, and variables related to the PLC.

Some embodiments are based on the recognition that a unified API can be provided for interactions with PLCs in a secure and auditable manner. The unified API is implemented at the unikernel level, which is configured to act as a common runtime by interpreting incoming commands, which can be written in either a Domain Specific Language (DSL) or as raw PLC commands and interpreted first consulting the blockchain network to ensure that the commands are valid. If so, a record of the command is sent as a transaction to be recorded on the blockchain network. This is done to provide auditability to the entire blockchain based industrial automation system. Such auditability is missing in existing industrial automation systems. Once the incoming command is validated, it is passed to the PLC to be executed.

According to an embodiment of the present disclosure, a blockchain-based industrial automation system having access to a blockchain network is provided. The blockchain-based industrial automation system comprises at least one controller computer, such as a PLC, including at least one processor, such as a CPU, and a memory (such as ROM) having stored thereon instructions that, when executed by the at least one processor, cause the at least one controller computer to perform operations. The operations including downloading a most recent block and an associated cryptographic certificate of the most recent block from the blockchain network. The downloaded most recent block and the associated cryptographic certificate are used to authenticate an update operation, such as an incoming command of the at least one controller. Based on the authentication, a response is generated from the operations for controlling an execution operation on the at least one controller.

Some embodiments provide that the authentication of the at least one command is performed based on invocation of one or multiple types of system call (syscall) requests.

Some embodiments provide the blockchain-based industrial automation further comprising one or more industrial devices. The one or more industrial devices comprise one or more of a sensor device, and an actuator device, which are each configured to transmit device state data to the at least one controller computer. The device state data being associated with a corresponding incoming command.

Some embodiments provide a server computing system, on top of the at least one controller computer, wherein the at least one controller compute is configured to transmit the incoming command to the server computing system, and the server computing system is configured to perform the operations that were earlier performed by the at least one controller computer. These operations include downloading the most recent block and an associated cryptographic certificate of the most recent block from the blockchain network. Further, authenticating the incoming command of the at least one controller computer based on the downloaded most recent block and the associated cryptographic certificate. Finally, generating the response for controlling an operation on the at least one controller computer based on the authentication.

Some embodiments are based on the recognition that the incoming command is one of a firmware update command, an industrial automation process execution command, and the like.

Some embodiments provide that the memory comprises a unikernel for storing the instructions for implementing the blockchain-based industrial automation system. The unikernel is associated with an edge computing architecture in some embodiments.

Various embodiments provide exchange of messages between the at least one controller computer and the blockchain network using a communication protocol relying on a protocol of the blockchain network. The protocol may be a protocol of a permissioned blockchain network, for example.

Some embodiments provide execution of verifiable computing commands using the blockchain-based industrial automation.

According to one embodiment, a method for providing blockchain-based industrial automation is disclosed. The method comprises downloading a most recent block and an associated cryptographic certificate of the most recent block from a blockchain network. The method further comprises authenticating an update operation of at least one controller computer based on the downloaded most recent block and the associated cryptographic certificate. Additionally, the method comprises generating a response for controlling an execution operation on the at least one controller computer based on the authentication.

According to one embodiment, a non-transitory computer readable storage medium embodied thereon a program executable by a processor for performing the method described above for providing blockchain based industrial automation is disclosed.

[Brief Description of Drawings]

[Fig. 1A]

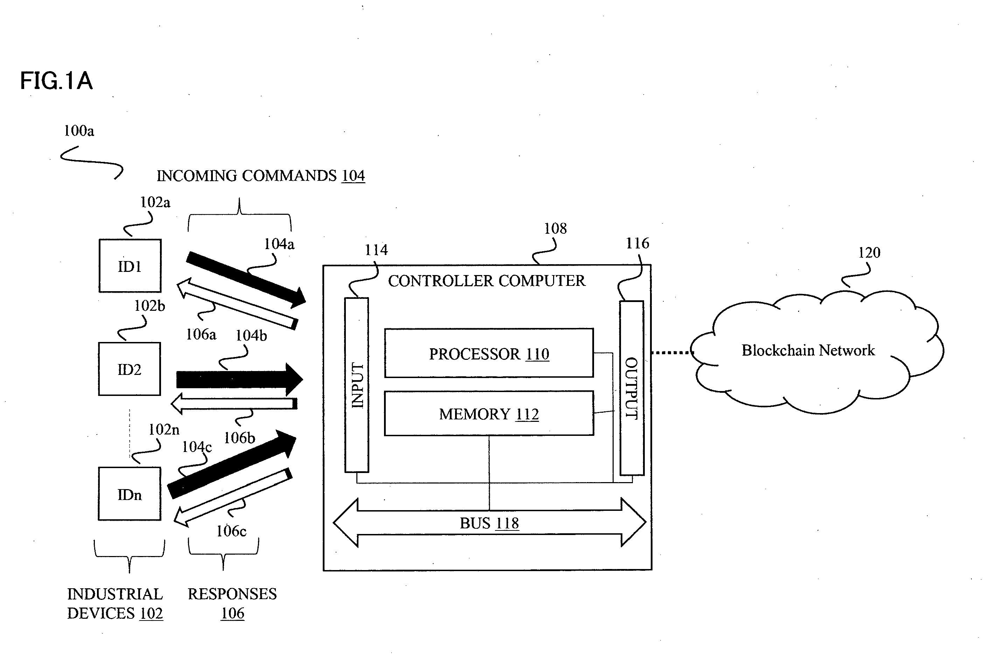

FIG. 1A illustrates an architecture of an industrial automation system, according to some embodiments of the present disclosure.
[Fig. 1B]

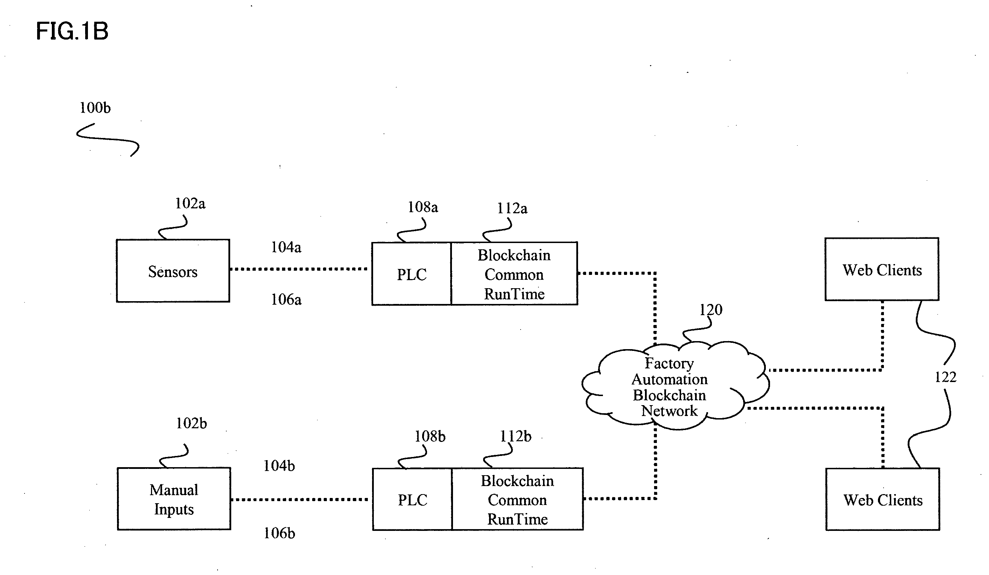

FIG. 1B illustrates a block diagram of an example of a Programmable Logic Controller (PLC) based system using the architecture of FIG. 1A, according to some embodiments of the present disclosure.
[Fig. 1C]

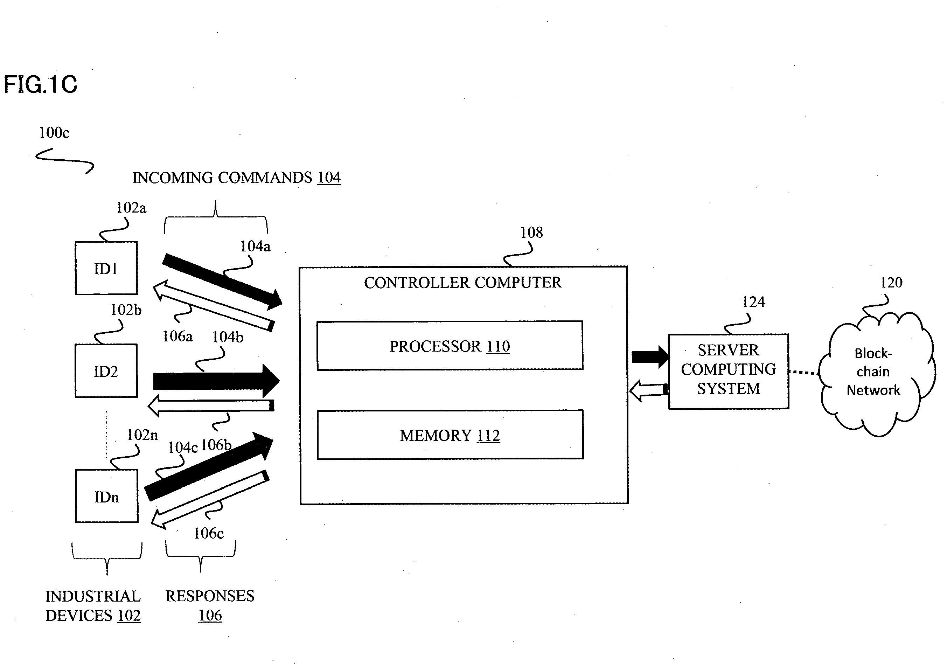

FIG. 1C illustrates another architecture of an industrial automation system, according to some embodiments of the present disclosure.
[Fig. 1D]

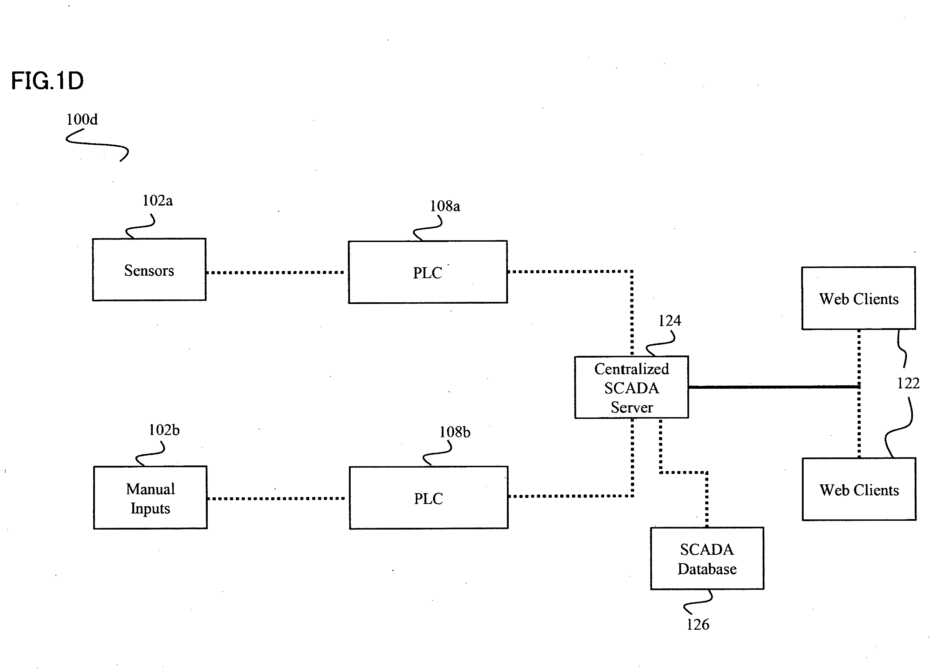

FIG. 1D illustrates a block diagram of an example of a Supervisory Control and Data Acquisition (SCADA) based system using the architecture of FIG. 1C, according to some embodiments of the present disclosure.
[Fig. 2]

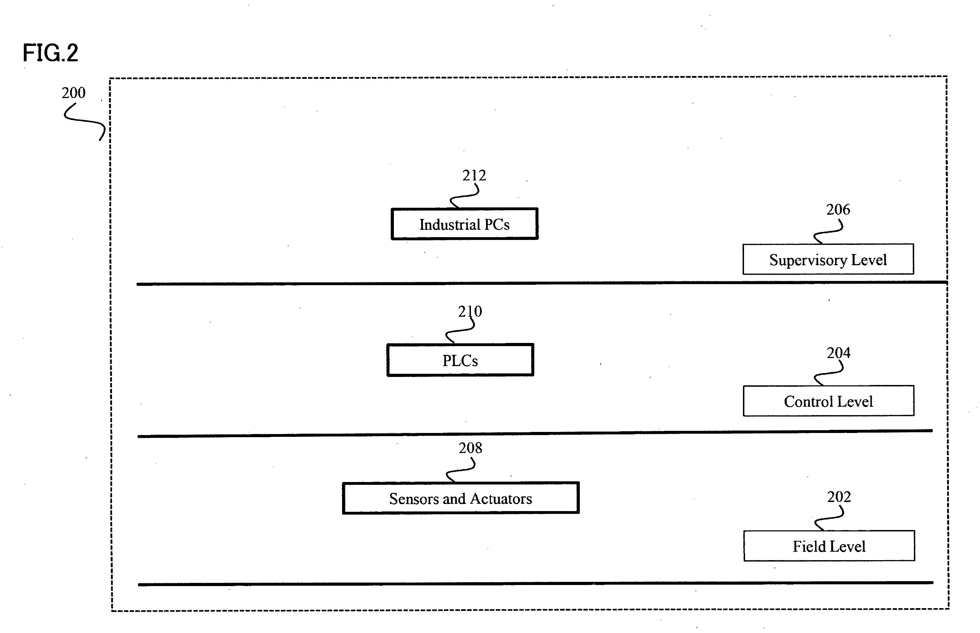

FIG. 2 illustrates a block diagram of a control layer stack for an industrial automation system, according to some embodiments of the present disclosure.
[Fig. 3]

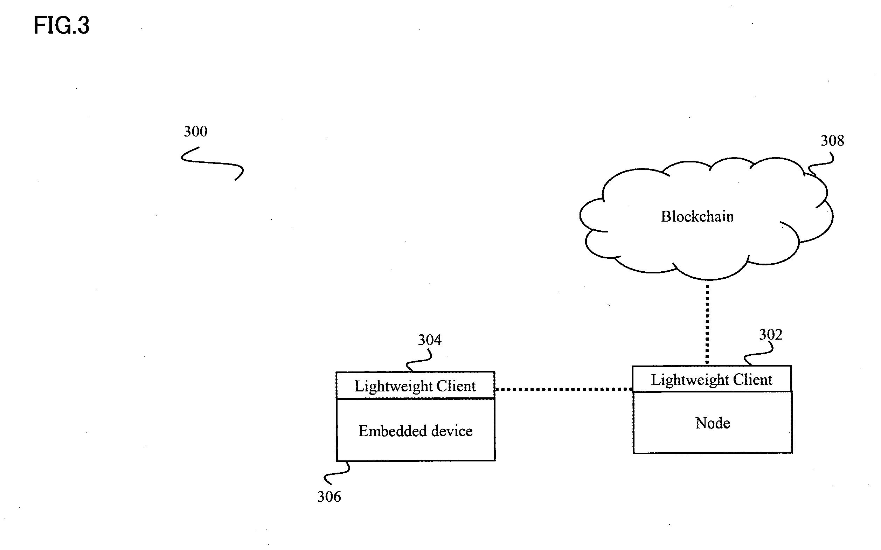

FIG. 3 illustrates a block diagram of a blockchain system supporting a lightweight client, according to some embodiments of the present disclosure.
[Fig. 4A]

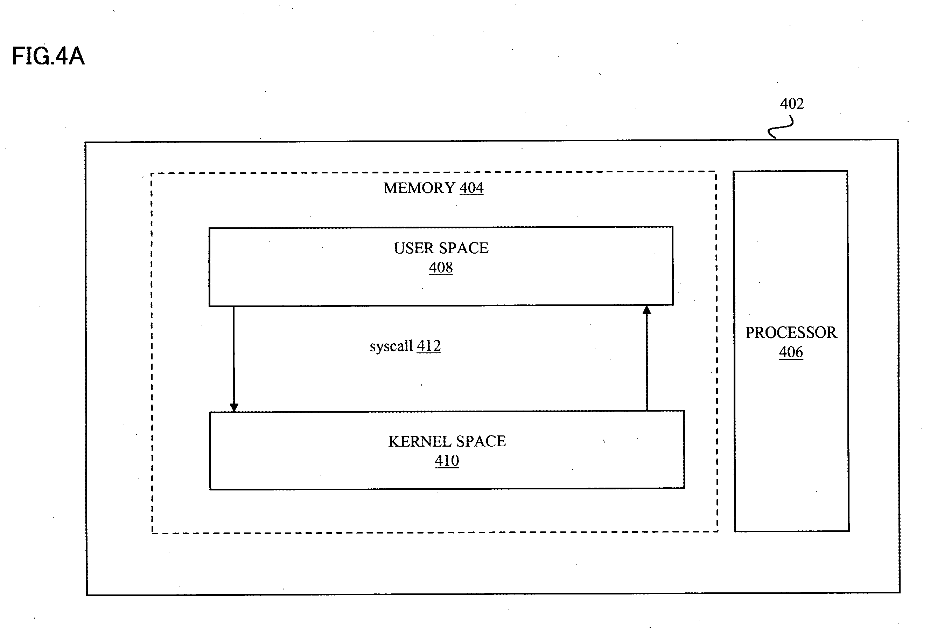

FIG. 4A illustrates a block diagram showing components of a user space and a kernel space in a computing system, according to some embodiments of the present disclosure.
[Fig. 4B]

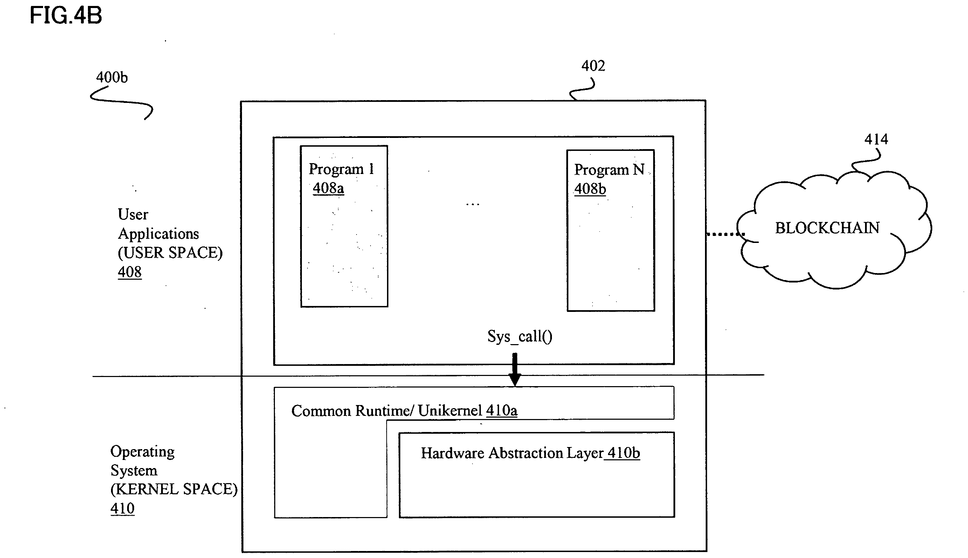

FIG. 4B illustrates a block diagram showing a common runtime implementation of the unikernel in a blockchain based industrial automation system, according to some embodiments of the present disclosure, according to some embodiments of the present disclosure.
[Fig. 5A]

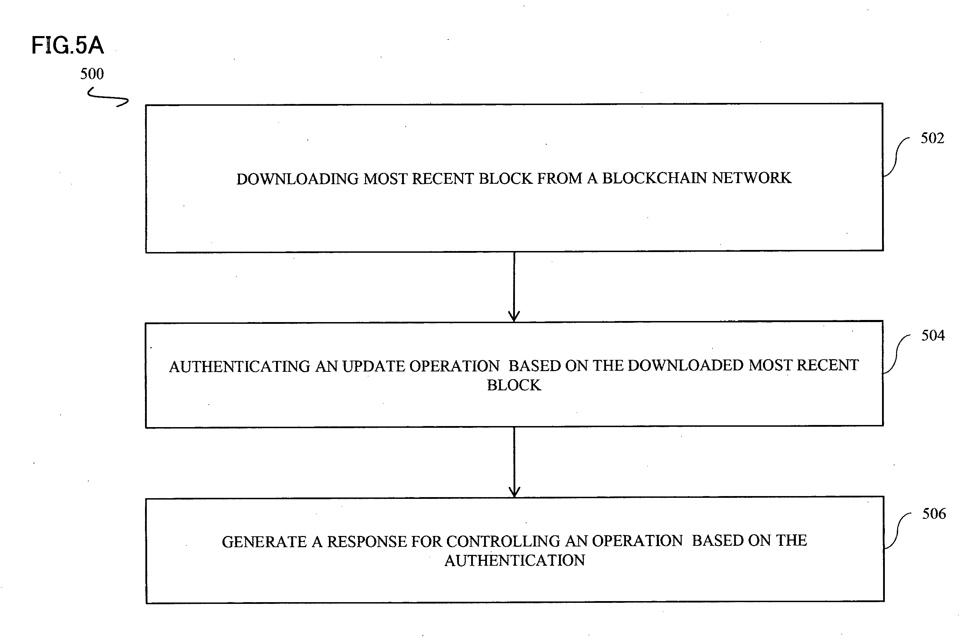

FIG. 5A illustrates a flow diagram of a method for managing a blockchain based industrial automation system, according to some embodiments of the present disclosure.
[Fig. 5B]

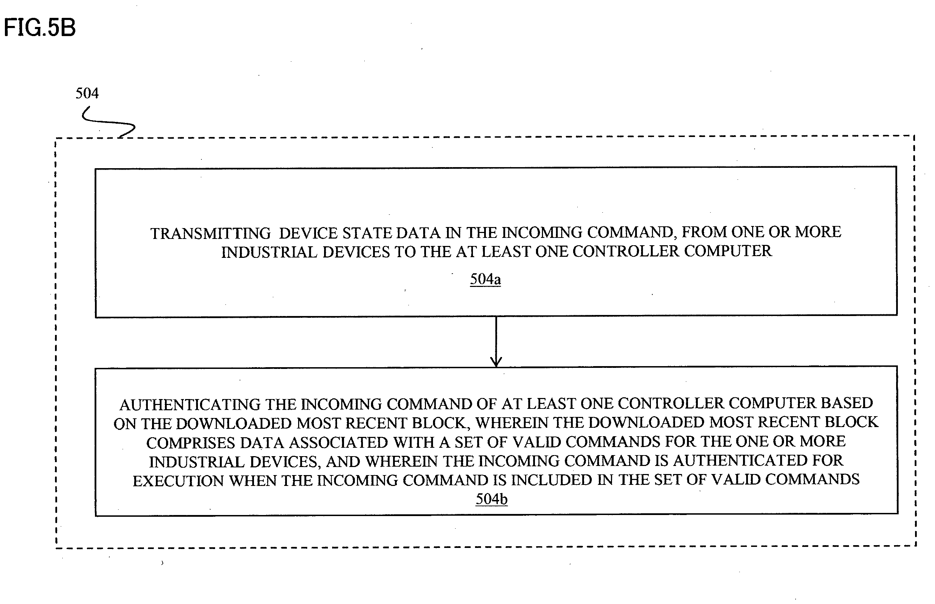

FIG. 5B illustrates a flow diagram of another method for managing a blockchain based industrial automation system, according to some embodiments of the present disclosure.
[Fig. 5C]

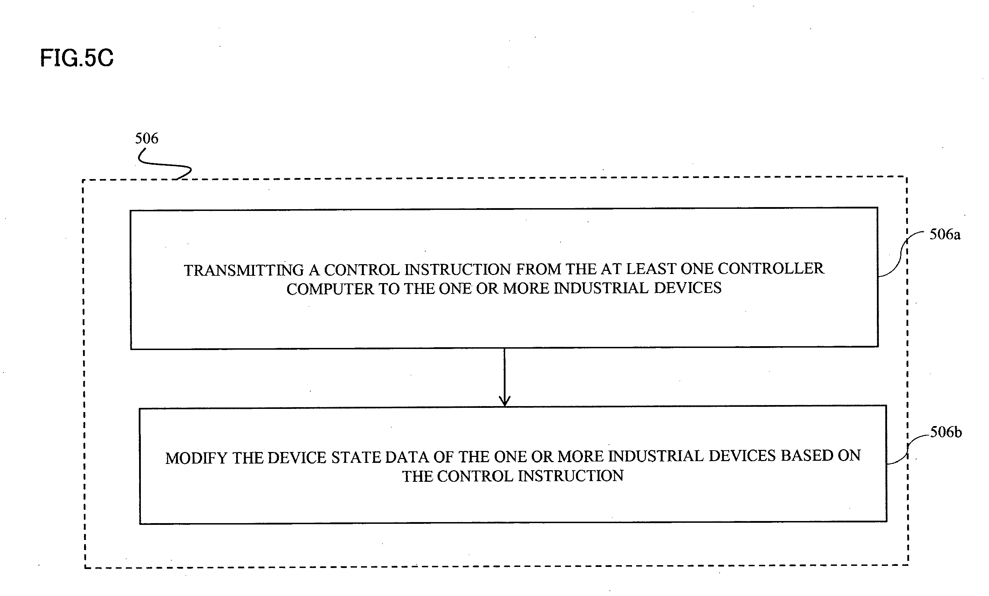

FIG. 5C illustrates yet another flow diagram of a method for managing a blockchain based industrial automation system, according to some embodiments of the present disclosure.
[Fig. 6]

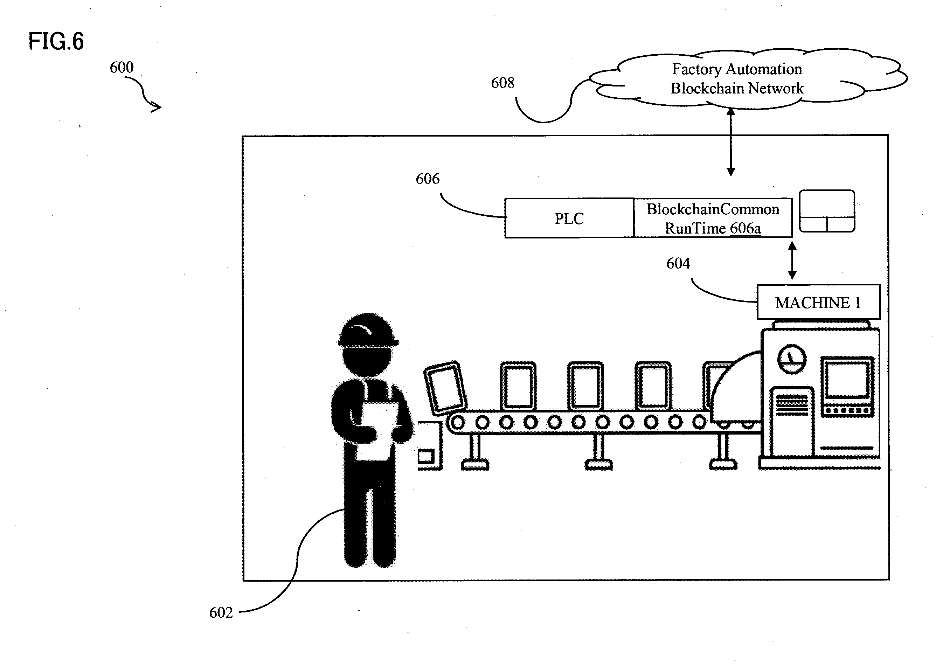

FIG. 6 illustrates an environment for implementation of an industrial automation system based on blockchain technology, according to some embodiments of the present disclosure.
[Fig. 7]

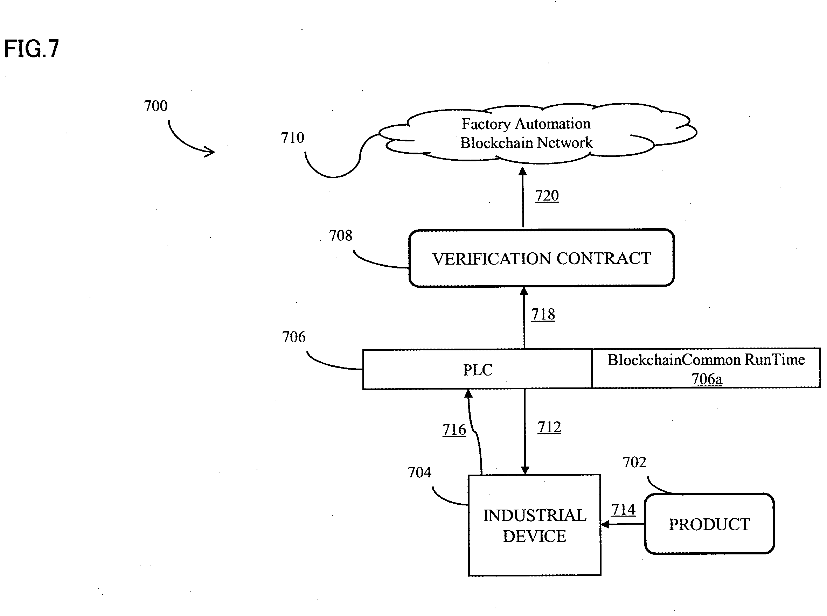

FIG. 7 illustrates an exemplar use case for implementation of an industrial automation system based on blockchain technology for verifiable computing, according to some embodiments of the present disclosure.

[Description of Embodiments]

In the following description, for purposes of explanation, numerous specific details are set forth to provide a thorough understanding of the present disclosure. It will be apparent, however, to one skilled in the art that the present disclosure may be practiced without these specific details. In other instances, apparatuses and methods are shown in block diagram form in order to avoid obscuring the present disclosure.

As used in this specification and claims, the terms "for example," "for instance," and "such as," and the verbs "comprising," "having," "including," and their other verb forms, when used in conjunction with a listing of one or more components or other items, are each to be construed as open ended, meaning that that the listing is not to be considered as excluding other, additional components or items. The term "based on" means at least partially based on. Furthermore, it is to be understood that the phraseology and terminology employed herein are for the purpose of the description and should not be regarded as limiting. Any heading utilized within this description is for convenience only and has no legal or limiting effect.

Various embodiments disclose systems and methods for secure industrial automation. The industrial automation systems and methods disclosed herein provide measures to ensure integrity of devices. Specifically, if the device is a "dumb" device or a device limited in computing capabilities, for example, field devices, controllers on factory floors, CNC machines and the like, their security can be compromised easily. As such these devices have limited computational power, limited memory, and some may even be powered by batteries, so ensuring their integrity is difficult with current technologies. Therefore, the various methods and systems disclosed herein are based on usage of blockchain technology to ensure integrity of these devices. To that end, the blockchain technology is used to ensure integrity of devices. The devices need to log all relevant transactions/operations performed by them into the blockchain, so that others on the blockchain network, like verifiers, can read this data and ensure integrity of the devices.

Some embodiments are based on recognition that this can be done using a plurality of ways like: 1) use blockchain transactions to ensure integrity of these devices, 2) implement a lightweight blockchain client at the device end, 3) implement force login of dumb devices at kernel level (such as via syscalls), and 4) by usage of smart contracts. To that end, a combination of all four techniques may be used to ensure integrity of these devices.

Various embodiments provide an industrial automation system where updates to devices at the control level, like PLCs can be carried out in an automated and trusted manner, using blockchain to ensure integrity of a device using the PLCs as controller computers. This is done by providing a blockchain-based common runtime, which provides security and integrity of an operating system of PLC in a way not possible previously. The blockchain can be used to store and distribute firmware and controller updates.

The operating system of the controller computer is secured by implementing the controller computer as a lightweight client of a blockchain network, which is used to implement a blockchain-based industrial automation network. This blockchain-based industrial automation network provides implicit trust and security, due to the way a blockchain network is implemented and built. That is to say, the decentralized nature of the blockchain network guarantees the security and integrity of the industrial automation network and the underlying devices. Additionally, the immutability of the blockchain provides auditability.

It is an objective of some embodiments to provide a robust and fault tolerant distributed computing system, which also ensures accountability, trust, auditability of transactions as well as of individual participants.

To that end, some embodiments of the present disclosure are based on consideration of the advantages of secure logging, tamper resistance and verifiability of audit data, access control, and decentralized architecture provided by permissioned blockchain networks. Additionally, the various embodiments disclosed herein leverage the advantages provided by smart contracts in identifying, isolating, and preventing malicious participants from threatening the integrity of the overall distributed computing system, and the use of permissioned blockchain architecture enables revoking of privileges (such as both read and write related privileges) of malicious participants to accomplish the objective of fault removal. Some embodiments also utilize unikernel architecture, through the use of syscalls, to implement the blockchain based common runtime for industrial automation systems and thus to provide better transparency and auditability of the overall system.

FIG. 1A illustrates an architecture of a blockchain-based industrial automation system 100a, according to some embodiments of the present disclosure. The blockchain-based industrial automation system 100a comprises one or more industrial devices 102, such as an industrial device 102a, an industrial device 102b, and an industrial device 102n, that are in communication with at least one controller computer 108.

The one or more industrial devices 102 may include one or more of sensors and actuators deployed in the industrial automation system 100a. Sensors are devices that are used to measure one or more process variables in an industrial process. These process variables are related to such as pressure and temperature measurement, conductivity measurement, flow measurement, pH measurement, filling level measurement, etc. and record the corresponding process variables of pressure, temperature, conductivity, pH value, level, flow rate, and the like. Actuators are devices that are used to influence process variables. These include, for example, pumps or valves that can influence the flow of a liquid in a pipe or the filling level in a container. To that end, the one or more industrial devices 102 also include remote I/Os, radio adapters and general devices that are arranged at the field level in the industry, for example at a factory floor. The one or more industrial devices 102 (also referred to as "dumb" devices) have very little computing and power resources available at their disposal. Some industrial devices even operate using batteries. Therefore, any control operation designated for the one or more industrial devices 102 is carried out by virtue of their communication with the at least one controller computer 108.

In some embodiments, the communication between the one or more industrial devices 102 and the at least one controller computer 108 is carried out by sending an incoming command 104 of the corresponding industrial device 102 to the at least one controller computer 108. The at least one controller computer 108 authenticates the corresponding industrial device 102 using blockchain technology and generates a response 106 to be transmitted to the corresponding industrial device 102. The at least one controller computer 108 is configured to authenticate the corresponding industrial device 102 by using a connection to a blockchain network 120, which implements the blockchain technology for providing a secure, trusted, fault tolerant and robust security mechanism for ensuring integrity of the one or more industrial devices 102.

To that end, the at least one controller computer 108 comprises one or more components including at least one processor 110, a memory 112, an input unit 114, an output unit, and a bus 118. The at least one processor 110 is configured to carry out instructions, which are stored in the memory 112. The instructions are executed to carry out operations designated for the at least one controller computer 108. These operations are related to control, management, and operation of the one or more industrial devices 102 in one embodiment. Specifically, the operations comprise authenticating the one or more industrial devices 102 based on blockchain technology. To that end, the operations include instructions related to downloading a most recent block and an associated cryptographic certificate of the most recent block from the blockchain network 120. Further, the one or more industrial devices 102 are validated based on the downloaded most recent block and the associated cryptographic certificate and a response is generated based on the authentication, for transmitting to the one or more industrial devices 102. The response is indicative of a success or a failure of authentication of the one or more industrial devices 102. Accordingly, an execution operation related to operation of the one or more industrial devices 102 being controlled by the at least one controller computer 108, is executed or stopped from execution based on the authentication. For example, if the authentication is successful, the execution operation is executed, but if the authentication is not successful, the execution operation is prevented or stopped from execution.

The communication between the at least one controller computer 108 and the one or more industrial devices 102 and further the blockchain network 120 is carried out via: the input unit 114 for receiving incoming data and the output unit 116 for transmitting outgoing data. The input and output communication between the at least one controller computer 108 and the one or more industrial devices 102 may be carried out using a suitable industrial communication protocol, including but not limited to, fieldbuses such as Profibus®, Foundation® Fieldbus, Highway Addressable Remote Transducer Protoco (HART®), Control and Communication Link (CC-Link), Common Industrial Protocol (CIP), Ethernet IP, ControlNet, Factory instrumentation protocol (FIP), Modbus®, Profinet®, SafetyNET-p, SafetyBUS, and the like.

The input and output communication between the at least one controller computer 108 and the blockchain network 120 is carried using any suitable wired or wireless network communication protocol, including internet.

The communication between the different components within the at least one controller computer 108 is carried out using the bus 118. The at least one controller computer includes the memory 112 for storing the instructions as described above. The memory 112 can include random access memory (RAM), read only memory (ROM), flash memory, or any other suitable memory systems. The memory 112 can be a volatile memory unit or units, and/or a non-volatile memory unit or units. The memory 112 may also be another form of computer-readable medium, such as a magnetic or optical disk.

In some embodiments, the memory 112 also stores an operating system associated with the at least one controller computer. The operating system may be based on a unikernel architecture, such that the unikernel acts as a specialized machine image, where any application running on the at least one controller computer 108 is linked against needed kernel functionality in the form of libraries. For example, the unikernel may be implemented using known unikernel solutions, including but not limited to, MirageOS, u-root, and Linux Kernel Library (LKL).

To that end, the unikernel is used to provide a lightweight client for the blockchain network 120, running on the at least one controller computer 108. The lightweight client further provides edge computing support for the at least one controller computer 108, by virtue of transferring application specific computing operations closer to the controlled device (which is the industrial device 102), that is to say, on the edge, and keeping other complex operations (related to blockchain) away from the edge and pushed towards the blockchain network 120.

The unikernel is implemented as a blockchain based common runtime in some embodiments. The common runtime comprises a code, a programme or software that has a managed execution environment. The common runtime code is a code compiled to an intermediate form of computer language, which can be executed across platforms supporting different programming languages. The platforms or end computers can execute the common runtime code by using their native compilers. To that end, the blockchain network 120 is configured to distribute binaries or compile-ready copies on the common runtime to all the controller computers connected on the blockchain network 120. In some embodiments, the blockchain network 120 is a permissioned blockchain network, and the common runtime is implemented through smart contracts associated with permissioned blockchain networks.

Smart contracts, in the context of blockchain networks, may be defined as executable computer programs, that define a set of rules, data, and relationships, that must be enforced on the execution of the smart contract. Smart contracts are immutable, in the sense that they cannot be manipulated once they are added to the distributed ledger architecture of the blockchain network that they are defined for. Further, invocation of smart contracts by nodes or computing systems of the blockchain network results in transactions that are then recorded on the blockchain network. Smart contracts act as trusted network services within the permissioned blockchain network and may be used as tools to ensure fault tolerance and removal capabilities for a node in the permissioned blockchain network. The smart contract may be distributed to the nodes of the permissioned blockchain network in the form of at least one of a source code file or a trusted binary file. The nodes of the permissioned blockchain network in this case may be one or more controller computers connected to the blockchain network 120. These nodes compile and execute the smart contract, and post results of the execution of the smart contract back to the blockchain network 120. The blockchain network 120 then authenticates each node by verifying the results of execution posted by each node based on a verification algorithm, such as a consensus algorithm like a proof of work algorithm or a proof of stake algorithm.

In some embodiments, the smart contracts may include rules related to device state data of the one or more industrial devices 102, which are transmitted from the one or more industrial devices 102 to the at least one controller computer 108 via incoming commands 104. The incoming command may be a firmware update command, an industrial automation process execution command, an industrial automation variable update command (such as temperature or pressure update), and the like. The device state data is associated with a corresponding incoming command and is verified by execution of the smart contract by the at least one controller computer 108, and the results of verification published back on the blockchain network 120.

In some embodiments, the at least one controller computer 108 downloads only the most recent block from the blockchain network 120, and not the entire copy of blockchain, in order to implement a lightweight blockchain client on the at least controller computer 108. The most recent block includes the most updated copy of the smart contract. The execution of the smart contract then results in verification of the one or more industrial devices 102 connected to the at least one controller computer 108. Further, access to smart contracts or common runtime provided by the most recent block of the blockchain network 120 is done via syscalls, which act as APIs for accessing the unikernel.

To that end, the at least one controller computer 108 is configured to receive updates from the blockchain network 120, and these updates are signed and encrypted such that only the intended controller computer 108 is able to interpret the update. To that end, the at least one controller 108 is configured to download the most recent block from the blockchain network 120. Each block on the blockchain network 120 has associated with it, a unique cryptographic certificate. This cryptographic certificate is used to authenticate the corresponding block. So, when the at least one controller computer 108 receives an update from the blockchain network 120, it is in the form of the most recent block and the block's associated cryptographic certificate. Then, using asymmetric cryptography (public and private keys) an update intended for the at least one controller computer 108 is signed by the updating party, to provide traceability, and encrypted with the public key of the at least one controller computer 108 in question.

The updates are received by the at least once controller computer 108 based on a set of rules or subscription guidelines included in the blockchain based common runtime or unikernel running on the at least once controller computer 108. Thus, each controller computer 108 is able to subscribe to the blockchain network 120 for block updates. If the blockchain-based common runtime is unable to interpret the block, i.e., it cannot successfully decrypt the contents of the block with its private key, then it means that the block does not contain a relevant update and discards it. If the blockchain-based common runtime is able to successfully decrypt and thereby interpret the block update, it checks the associated cryptographic certificate to ensure that block update is valid, i.e., the current block can be reached from an initial block. The update is applied to the at least one controller computer 108 if the block is valid.

In this manner, low computing, and low power (or "dumb") industrial devices 102 are validated for integrity, using the secure blockchain technology, via the at least one controller computer 108.

The at least one controller computer 108 includes industrial control layer devices such as a Stored Program Control (SPC) device or a PLC device. FIG. IB illustrates an example PLC based industrial automation system.

FIG. 1B illustrates a block diagram of an example of a PLC based system 100b using the architecture of FIG. 1A, according to some embodiments of the present disclosure. The PLC based system 100b comprises a sensor 102a and one or more sources of manual input 102b (such as a field personnel or a machine operator). The sensor 102a and the manual input source 102b represent the one or more industrial devices 102 discussed in FIG. 1A.

The sensor 102a is communicatively coupled to a PLC 108a, having a blockchain based common runtime 112a. The manual input source 102b is communicatively coupled to a PLC 108b, having a blockchain based common runtime 112b. The PLCs - 108a and 108b are equivalent to the at least one controller computer 108 shown in FIG. 1A.

The PLCs - 108a and 108b are further communicatively coupled to the factory automation blockchain network 120 (same as blockchain network 120 shown in FIG. 1A), which may be further coupled to one or more web clients 122. The one or more web clients 122 are computing systems, which may be used to implement some computing and power intensive functions related to the factory automation blockchain network 120. These functions may include such as participating in consensus algorithms, acting as full nodes to store a copy of the factory automation blockchain network 120, generating transactions for the factory automation blockchain network 120, acting as miners and minting rewards from the factory automation blockchain network 120, and the like.

The factory automation blockchain network 120 is used to securely update a PLC, such as the PLC 108a or the PLC 108b, and also ensure the integrity of its operating system or programs. For this, the factory automation blockchain network 120 acts as a trusted source of truth for firmware updates for the PLCs 108, which helps to guarantee security and integrity of the PLCs 108 and their associated industrial devices 102. At the same time, the firmware updates distributed by the factory automation blockchain network 120 helps to make the maintenance and management of a PLC auditable and tamper resistant.

Some embodiments provide the industrial automation system 100b that prevents tampering by process line operators providing one or more manual inputs 100b. In current industrial systems, operators have direct access to PLCs and can adjust on the fly without an auditable trail, such as the manual inputs 102b being directly passed to the PLC 108b without any monitoring and authentication. This is changed in the industrial automation system 100b, so that the operator generating the manual inputs 102b interacts with the PLC 108b by sending would input commands 104b, which are validated by the PLC 108b using the blockchain based common runtime 112b, implemented using unikernel architecture and factory automation blockchain network 120. Upon successful validation, command is passed through to the underlying PLC 108b, which sends the response 106b to the operator 102b about successful execution of the command.

In some embodiments, the blockchain based common runtime 112 comprises a copy of operating system distributed by the blockchain network 120 to all the PLCs 108 connected on the blockchain network 120.

The blockchain network 120 provides a trusted source of truth for the industrial automation system 100b that the blockchain-integrated unikernel in the form of blockchain based common runtime 112 can check against. The blockchain-integrated unikernel, at random times, can download the block with the most recent update and check for equality of the programs through hashes or the like. This provides a level of system integrity not possible without a blockchain based system.

The blockchain based common runtime 112 provides blockchain client functionality on the controller computers 108, such as the PLC 108a and the PLC 108b, along with libraries that provide PLC system features. The libraries include but are not limited to I/O, IEC 61131-3 compliance, and libraries to interface with one or more industrial devices 102. The libraries are built using modem programming language toolchains, including but not limited to, Go or C++ to produce a single binary that can be loaded onto the ROM modules of PLCs 108a and 108b.

In some embodiments, the PLCs 108a and 108b, are configured to received updates from the factory automation blockchain network 120, and these updates are signed and encrypted such that only the intended PLC can interpret the update. To that end, a unique cryptographic certificate is associated with each PLC, and using asymmetric cryptography (public and private keys) an update intended for a particular PLC is signed by the updating party, to provide traceability, and encrypted with the public key of the PLC in question. The blockchain-based common runtime 112 on each PLC subscribes to the factory automation blockchain network 120 for block updates. If the blockchain-based common runtime 112 is unable to interpret the block, i.e., it cannot successfully decrypt the contents of the block with its private key, then it means that the block does not contain a relevant update and discards it. If the blockchain-based common runtime 112 is able to successfully decrypt and thereby interpret the block update, it checks the associated cryptographic certificate to ensure that block update is valid, i.e., the current block can be reached from an initial block. The update is applied to the PLC if the block is valid.

In this way, the industrial automation system 100b is able to implement the architecture of FIG. 1A for blockchain-based industrial automation, with high security, trust, fault tolerance and verifiability.

Another architecture for implementing a blockchain based industrial automation system is shown in FIG. 1C.

FIG. 1C illustrates another architecture of an industrial automation system 100c, according to some embodiments of the present disclosure. The architecture of the industrial automation system 100c is mostly similar to the architecture of the industrial automation system 100a, with only exception of having an additional server computing system 124 on top of the controller computer 108, for interacting with the blockchain network 120.

Similar to the blockchain-based industrial automation system 100a, the blockchain-based industrial automation system 100c comprises the one or more industrial devices 102, such as the industrial device 102a, the industrial device 102b, and the industrial device 102n, that are in communication with the at least one controller computer 108. The communication between the one or more industrial devices 102 and the at least one controller computer 108 is carried out by sending the incoming command 104 of the corresponding industrial device 102 to the at least one controller computer 108. The at least one controller computer 108 authenticates the corresponding industrial device 102 using blockchain technology and generates the response 106 to be transmitted to the corresponding industrial device 102. The at least one controller computer 108 is configured to authenticate the corresponding industrial device 102 by using a connection to the blockchain network 120 via the server computing system 124.

As illustrated earlier, the at least one controller computer 108 comprises one or more components including the at least one processor 110 and the memory 112 among others (previously shown in FIG. 1A). To that end, the server computing system 124 may also include a processor and a memory but may be configured with a higher computing capability than the at least one controller 108.

To that end, the server computing system 124 is configured to provide the functionality provided by the at least one controller computer 108 previously described in conjunction with FIG. 1A and FIG. 1B. Specifically, the server computing system 124 is configured to act as the interface between the at least one controller computer 108 and the blockchain network 120.

In some embodiments, the server computing system 124 is configured to receive updates from the blockchain network 120 based on subscription rules included in a smart contract or unikernel associated with the at least one controller computer 108. The at least one controller computer 108 may transmit a copy of the smart contract to the server computing system 124. The server computing system 124 receives the updates in the form of most recent block and its associated cryptographic certificate. Then, the server computing system 124 authenticates the block using its associated cryptographic certificate and passes the result of authentication to the at least one controller computer 108.

In some embodiments, the at least one controller computer 108 is configured to transmit the incoming command 104 (such as any of the incoming commands 104a - 104c) to the server computing system 124. The server computing system 124 is then configured to download the most recent block and the associated cryptographic certificate of the most recent block from the blockchain network 120. Then, server computing system 124 is configured to authenticate the incoming command of the at least one controller computer 108 based on the downloaded most recent block and the associated cryptographic certificate. To that end, the server computing system 124 is configured to check if the incoming command is included in a list of valid commands included in the downloaded most recent block. Based on the result of authentication, the server computing system 124 is configured to generate the response for controlling the execution operation on the at least one controller computer 108.

One common implementation of the architecture 100c is through a Supervisory Control and Data Acquisition (SCADA) system, which is shown in FIG. 1D.

FIG. 1D illustrates a block diagram of an example of a SCADA based system 100d using the architecture of FIG. 1C, according to some embodiments of the present disclosure.

The SCADA based system 100d comprises the one or more industrial devices 102, such as the industrial device 102a and the industrial device 102b. The industrial device 102a comprises sensors and the industrial device 102b corresponds to a manual input device in an example. The manual input may be provided by a field or machine operator to an industrial field device. The industrial devices 102 are communicatively coupled to the at least one controller computer 108, such as the controller computer 108a and the controller computer 108b, using any industrial communication protocol described earlier. The at least one controller computer 108 may be a PLC, such as the PLC 108a and the PLC 108b. Each of the PLCs are then connected to the server computing system 124, which is a centralized SCADA server in the industrial automation system 100d. The centralized SCADA server 124 is further connected to SCADA database 126, which stores data associated with control, processes, and authentication of industrial devices 102. In some embodiments, the SCADA database 126 stores data offloaded to the SCADA database 126 by the centralized SCADA server 124. This data may be related to blockchain related data, for example a copy of a blockchain, a smart contract, a unikernel, and the like. The centralized SCADA server 124 is further connected to one or more web clients 122, which may be further connected to a blockchain network.

SCADAs are centralized systems that manage PLCs and offer features such as updating PLCs and recording the data from the PLCs. Prior systems at the supervisory level used to be isolated from the internet. However, as supervisory systems are increasingly connected to the internet, this has greatly increased the attack surface of industrial systems that have not been designed with cybersecurity in mind. Furthermore, PLCs run specialized monolithic operating systems that make it economical for hackers to try to discover exploits at the OS level that can be accessed through the internet. Finally, the requirements of most industrial systems make it difficult for software updates and security patches to be applied to the system. But this is avoided in the industrial system 100d by using a unikernel in the PLCs, which is updated only based on updates provided by the blockchain network connected to the centralized SCADA network 124. This may be the same blockchain network 120 shown in FIG. 1C, which sends updates governed by a smart contract, and the updates are in the form of the most recent block of the blockchain network 120 and its associated cryptographic certificate.

To that end, the centralized SCADA server 124 may obtain the smart contract from the blockchain network 120 and store in the SCADA database 126. The centralized SCADA server 124 also receives the most recent block from the blockchain network 120 in case of any update, authenticates the block using its associated cryptographic certificate and the smart contract, and passes the result of authentication to the PLCs 108a and 108b. If the authentication is successful, the PLCs 108a and 108b are updated, such as by updating their unikernel. If the authentication is not successful, the updates are not passed to the PLCs 108a and 108b.

In some embodiments, the authentication by the centralized SCADA server 124 leads to invocation of one or multiple types of system call (also referred to hereinafter as syscalls) requests for the unikernel of the PLCs 108a and 108b. The results of invocation are then sent back to the centralized SCADA server 124, which checks if the results are valid. If the results are valid, the updates received from the blockchain network 120 are applied to the PLCs 108a and 108b. If the results are not valid, then the updates are discarded.

In some embodiments, when the PLCs 108a and 108b receive any incoming command, such as from their corresponding industrial devices 102a and 102b respectively, the incoming command is transmitted to the centralized SCADA server 124. The centralized SCADA server 124 is then configured to download the most recent block and the associated cryptographic certificate of the most recent block from the blockchain network 120. Then, the centralized SCADA server 124 is configured to authenticate the incoming command of the at least one controller PLC 108 based on the downloaded most recent block and the associated cryptographic certificate. To that end, the centralized SCADA server 124 is configured to check if the incoming command is included in a list of valid commands included in the downloaded most recent block. Based on the result of authentication, the centralized SCADA server 124 is configured to generate the response for controlling the execution operation on the at least one PLC 108.

In any of the scenarios described above, the PLCs 108a are not required to perform most of the processing, and the majority of blockchain based authentication and computing tasks are offloaded to the centralized SCADA server 124. This helps to integrate security and trust mechanisms inbuilt in blockchain technology, at industrial automation and device level, without requiring much computing power from end field devices and controller devices like the PLCs. Also, the authentication by downloading only the most recent block of the blockchain network, instead of downloading the entire copy of the blockchain network by the centralized SCADA server 124 further helps in implementing a lightweight blockchain client even at the centralized SCADA server 124 level.

To that end, the lightweight centralized SCADA server 124 is further coupled to the one or more web clients 122. The one or more web clients 122 are computing systems, which may be used to implement some computing and power intensive functions related to the blockchain technology. These functions may include such as participating in consensus algorithms, acting as full nodes to store a copy of the entire blockchain network, generating transactions for the industrial automation system 100d, acting as miners and minting rewards from the blockchain network 120, and the like.

The architecture of the industrial automation system 100d shown in FIG. 1D, when viewed in combination with FIG. 1A, FIG. 1B and FIG. 1C is used to implement an industrial automation system with edge computing.

Edge computing provides a decentralized infrastructure for computing in which computing resources and application services can be distributed among participants of an edge computing system. "Edge" may refer to a data point where data to be operated upon is actually collected or used. Edge computing provides several advantages, such as high throughput, reduced response time, better data privacy and data security, and sometimes even reduced operational costs. For an industrial automation system, such as any of the systems discussed in FIG. 1A, FIG 1B, FIG. 1C, and FIG. 1D, an edge computing system architecture may be represented by using a control layer stack as illustrated in FIG. 2.

FIG. 2 illustrates a block diagram of a control layer stack 200 for an industrial automation system, according to some embodiments of the present disclosure. The control layer stack 200 comprises a field level 202, a control level 204, and a supervisory level 206. The field level 202 comprises the one or more industrial devices 102, such as sensors and actuators 208. The control level 204 comprises the at least one controller computer 108 such as PLCs 210. The supervisory level 206 comprises the server computing system 124, such as industrial PCs 212.

In some embodiments, the PLCs 210 are integral components of the control level 204 of the control layer stack 200 in industrial automation systems. The PLCs 210 are configured to interface with many other devices such as devices from the field level 202 or other PLCs. The PLCs 210 also interface with devices from higher level, that is with the industrial PCs 212 at the supervisory level 206. The industrial PCs 212 at the supervisory level 206 consist of commodity PCs that run standard operating systems with special software that can interface with devices from the lower levels. To that end, the industrial PCs 212 may act as centralized SCADA server 124 illustrated in FIG. 1D. One or more of the control level 204 and the supervisory level 206 are further configured to interface with a blockchain network (not shown in FIG. 2) to implement the functionalities of the blockchain-based industrial automation systems described in previous embodiments.

To that end, the devices at one or more of the control level 204 and the supervisory level 206 are configured to exchange messages with the blockchain network using a communication protocol relying on a protocol of the blockchain network. These protocols may include such as a Hyperledger protocol, a multichain protocol, a protocol implemented using Ethereum blockchain, a protocol implemented using Solana blockchain, and the like.

Various embodiments provide implementing the control layer stack 200 in a custom manner, where control and computing operations are distributed between different levels to achieve edge computing benefits for blockchain-based industrial automation systems disclosed previously. Broadly, the control and computing operations include one or more of: 1) collecting industrial device data, 2) authenticating updates to industrial automation system, such as the industrial automation system 100a shown in FIG. 1A as an example, 3) authenticating commands provided to industrial devices, and 4) providing blockchain-based verifiability of commands and updates to the industrial automation system. Out of these, the most computing intensive functions include the control and computing operations 2, 3, and 4. These control and computing operations may be distributed between the control level 204 and the supervisory level 206, based on a preferred edge computing architecture deployment of the control layer stack 200.

To that end, the control layer stack 200 may be configured to provide Industrial Internet-of-Things (IIoT) capabilities based on custom edge computing architecture installations. Each layer of the control layer stack 200 becomes more complex and aggregates multiple system functions, as control passes from bottom to top. The computing layer moves up the architecture stack, aggregating processing capabilities, information, and data from below. The purpose of any implementation is to provide fast and localized computing take place at the edge, while global compute, model development, management and security can benefit from the "wisdom of the cloud" provided in the blockchain network implemented above the supervisory level 206.

For example, in a thermal power plant setting, a problem to be solved may be maintaining a correct amount of temperature for a furnace. The edge device in this case may be a pump which circulates water in a cooling pipe of the furnace and maintains a desired flow of water or cooling liquid in the pipe at all times to maintain temperature requirements. Thus, at the field level 202 there may be a temperature sensor which collects temperature data of the cooling pipe and sends to the edge computing device at the control level 204, which would be running a control algorithm and making the adjustments to flow of liquid through the pump to regulate the temperature. If the objective is to orchestrate temperature across several devices or areas, then the edge becomes the temperature controllers at the control level 204 (whether individual components or standalone systems) and the edge-computing layer becomes the system coordinating the control, typically the PLC 210 or SCADA system 212.

In some other embodiments, the PLCs 210 is configured to receive an update of the operating system or unikernel running on them and before applying the update, authenticates that the update is valid. This is illustrated in the architecture 100b of FIG. 1B. In this case, the PLCs 210 become the edge devices.

In this manner, using the blockchain-based illustrated in FIG. 1A, FIG. 1B, FIG. 1C, and FIG. 1D, and using the control stack architecture of FIG. 2, blockchain-based industrial automation system supporting custom edge computing and IIoT may be implemented. Such a system is able to leverage security, accountability, verifiability, and reliability of blockchain systems, and faster computing, reduced turnaround time, better data privacy, lesser or selective data exposure and better scalability provided by edge computing architecture. To that end, the combination of edge computing and blockchain-based industrial automation described above is implemented using a lightweight client closer to the edge level.

FIG. 3 illustrates a block diagram of a blockchain system 300 supporting one or more lightweight clients, according to some embodiments of the present disclosure. The blockchain system 300 comprises one or more lightweight clients or nodes of a blockchain network 308: a lightweight client 302 and a lightweight client 304. The lightweight client 304 further comprises an embedded device 306. The blockchain network 308 is similar in functionality to the blockchain network 120 shown in FIG. 1A, FIG. 1B, and FIG. 1C.

The lightweight clients 302 and 304 may comprise any modern computer, such as an embedded computer, a laptop, a mobile phone, a smartphone, a tablet, a smart watch, a wearable computer, a point of sale (POS) terminal, a kiosk, a routing device, a monitoring terminal at a power plant, an electronic meter, and the like. To that end, the lightweight clients 302 and 304 may be the at least one controller computer 108 shown in FIG. 1A, FIG. 1B, FIG. 1C and FIG. 1D. In some embodiments, the lightweight clients 302 and 304 may be the server computing system 124 shown in FIG. 1C and FIG. 1D.

Some embodiments are based on the realization that the lightweight clients are computers with limited computational power, such as the PLCs and the SCADA server discussed in conjunction with previous figures. Therefore, these lightweight clients are incapable of storing a full copy of the blockchain 308 that they are part of. However, using the embodiments and the architecture of the industrial automation system discussed in previous embodiments, even these lightweight systems with low computational power may be completely trusted, secure and efficiently monitored for any malicious behavior. This may be possible due to the combination of smart contracts, unikernel, and most recent block-based authentication implemented in the industrial automation system 100a-100d disclosed in the various embodiments described herein.

In some embodiments, the lightweight clients 302 and 304 are implemented using the process of Zero-Knowledge proof, such as in zksnarks. A zk-SNARK or zero-knowledge succinct non-interactive argument of knowledge-based system is based on the concept of zero-knowledge proof. The zero-knowledge proof is a situation in which each of two parties in a transaction is able to verify to each other that they have a particular set of information, while at the same time not revealing what that information is. The zero-knowledge proof-based system provides better privacy and security in terms of blockchain based lightweight client implementations, as compared to traditional password-based systems known in the art.

In some embodiments, the lightweight clients 302 and 304 are implemented using software libraries and APIs such as Bitcoin's BIP37, Electrum lightweight clients, filter commitments such as using Bitcoin's BIP 37's bloom filters, Electrum's reveal addresses, Dogecoin supported bloom filters and the like. Using filter-based commitments, lightweight clients receive a filter of all transactions or addresses in a given block. The lightweight clients then request the block if the filter matches their addresses/transactions.

In some embodiments, the lightweight clients, such as the node 302 is configured to download the most recent block associated with the blockchain 308 and authenticate an update operation which is intended for the node 302, based on the most recent downloaded block and its associated cryptographic certificate. The update operation may be such as a firmware update operation, a command execution operation, and the like.

Various embodiments further provide that the blockchain network 308 is a permissioned blockchain network. Thus, the node 302 (or equivalently the node 304) is configured to exchange messages with other nodes in the permissioned blockchain network 308 to coordinate the actions of all the nodes that are part of the permissioned blockchain network 308. This coordination is in turn done to reach a consensus among all the nodes in the permissioned blockchain network 308 regarding a current state of the permissioned blockchain network 308, in accordance with a distributed computing program, known generally as a consensus algorithm. One example of the consensus algorithm that may be used by the permissioned blockchain network 308 to reach the consensus is a practical byzantine fault tolerant (PBFT) algorithm, in which a node is configured to receive confirmations from all other nodes in the permissioned blockchain network 308 regarding validity of the node's transactions. The consensus is then reached based on the total number of confirmations received by the node.

Various embodiments provide that a smart contract is stored on the node 302 (or the node 304) as part of the node's unikernel program. The unikernel is the operating system that does not have anything running on the top of it. The unikernel is received in the form of the smart contract which is distributed to all nodes that are connected to the blockchain network 308. Then, the smart contract is invoked using syscalls at the device level, which is the lightweight client 302 or 304 in this case. The syscalls are part of the unikernel. In some embodiments, the smart contract may also be the operating system of the lightweight client 302 or 304 or may be a part of the operating system. This will be further described in conjunction with FIG. 4A and FIG. 4B below.

FIG. 4A illustrates a block diagram showing components of computing system 402 comprising a memory 404 and a processor 406. The memory 404 further comprises a user space 404 and a kernel space 410. The computing system 402 may represent the at least one controller 108 or the central computing server 124 described previously.

The memory 404 of the computing system 402 comprises a portion which stores user programs, such as application programs, application data, APIs, software or code libraries, stored procedures, algorithms, computer instructions, user files and the like. This portion is the user space 408. The user programs in the user space 408 are generally written in any of the known high-level languages, such as C#, C++, Java, Python, Solidity, Java-Script, and the like. The user space 408 may also include various processes, such as industrial control processes, business processes or network interface processes, which define algorithms and logic instructions for carrying out one or more functions. The functions are application specific. One of the types of user programs in the user space 408 is a smart contract. The smart contract defines enforceable rules which are executed on execution of the smart contract. The execution of the smart contract in turn may invoke one or more processes, which require access to system's (operating system) resources. The system resources are stored in a separate portion of the memory 404 from the user space 408, which is known as the kernel space 410.

The kernel space 410 defines a portion of the memory 404 where core of the computing device 402, in the form of an operating system and its related programs, is stored. The kernel space 410 stores specialized programs which enable interfacing of various system resources, such as hardware and file system. The kernel space 410 may include specialized programs and data such as device drivers, memory management programs, I/O management programs, process management programs, and the like. Generally, kernel space programs are written in a low-level language, such as C.

The system resources encompassed by the kernel space 410 may be accessed from user space 408 processes through specialized requests sent to the kernel space 410 in the form of a system call or a syscall 412. Each resource access requires a separate syscall 412. In the various embodiments discussed previously, in conjunction with the blockchain based industrial automation system shown in FIG. 1A, FIG. 1B, FIG. 1C, and FIG. 1D, the kernel space 410 comprises a unikernel, which is a special purpose and standalone kernel which is specialized at compile time. The unikernel stores instructions which are specialized for a specific type of application. The attack surface of the unikernel is confined to the specialized application for which it is designed, as it is directly compiled into the application space. The unikernel is better suited for edge computing applications as compared to monolithic kernel due to its confined attack surface. The unikernel is also better suited for lightweight clients due its application specificity.

Various embodiments are based on the realization that the kernel 410 storing the unikernel, is used for implementing the edge computing architecture, such as the edge computing architecture described in conjunction with FIG. 2. Further, the unikernel is used to implement a lightweight client on the at least one controller computer 108 or on the server computing system 124, which are associated with the blockchain network 120 described in FIG. 1A, FIG. 1B, and FIG. 1C.

Some embodiments are based on the recognition that the unikernel comprises binary files that are compiled at application time. These binary files are received as updates from the blockchain network 120, which are then authenticated by the at least one controller computer 108 or the server computing system 124, based on downloading of the most recent block of the blockchain network 120, as has been described in previous embodiments.

Some embodiments are further based on the recognition that the unikernel is obtained as a copy of the smart contract distributed by the blockchain network 120, and invocation of the smart contract results in verification of its authenticity using the most recent block of the blockchain network 120. Therefore, the unikernel is common to all participants of the blockchain network and is also visible to all participants of the blockchain network 120 by invocation of their corresponding smart contract.

Some embodiments provide the unikernel as a common runtime software or code which is accessed using syscalls 412.

FIG. 4B illustrates a block diagram showing a common runtime implementation of the unikernel in a blockchain based industrial automation system 400b, according to some embodiments of the present disclosure. The blockchain based industrial automation system 400b is equivalent to the blockchain based industrial automation systems 100a, 100b, 100c, and 100d shown in FIG. 1A, FIG. 1B, FIG. 1C, and FIG. 1D respectively. The blockchain based industrial automation system 400b comprises at least one controller computer 108, which is shown as the computing system 402. Alternatively or in addition, the blockchain based industrial automation system 400b comprises at least one server computing system 124 as the computing system 402. The computing system 402 is connected to a blockchain network 414. The blockchain network 414 is equivalent to the blockchain network 120 described in FIG. 1A, FIG. 1B, and FIG. 1C.

As discussed previously in FIG. 4A, the computing system 402 comprises the user space 408. The user space 408 includes one or more application programs, like a program 1 408a and a program N 408b. These application programs are configured for industrial control applications in some embodiments. For example, application programs may be control programs for temperature control, pressure control, maintaining industrial control process variables within predefined limits, opening, and closing schedules of valves, and the like. The application programs may be written using known programming languages for industrial automation, such as ladder diagrams, function block diagrams, statement lists, logic functions and the like. To that end, the computing device 402 may be a PLC device or a SCADA computer, and the application programs are corresponding control programs for industrial control applications.

Further, the computing system 402 comprises the kernel space 410 which further comprises a common runtime or unikernel 410a and a hardware abstraction layer 410b.

In one embodiment, the unikernel 410a comprises a binary file for operating the computing device 402, and this unikernel 410a is common to all such computing devices which are connected on the blockchain network 414. The blockchain network 414 is an industrial automation blockchain network equivalent to the blockchain network 120 shown in FIG. 1A, FIG. 1B, and FIG. 1C. To that end, the blockchain network 414 distributes a verified common runtime to all the nodes or computing devices 402 connected on the blockchain network 414 to ensure integrity, security, and trust of the unikernel 410, which is very important for reliable operation of the computing device 402. To that end, the computing device 402 may be the at least one controller computer 108 or the PLCs 108a or 108b shown in FIG. 1A and FIG. 1B respectively, and reliable operation of the PLCs increases reliability of the overall industrial automation system of which the PLCs 108a or 108b (and any other additional PLCs) are a part of.

In one embodiment, the unikernel 410a is implemented as a smart contract, which is distributed to all participants of the blockchain network 414. To that end, the blockchain network 414 is a permissioned blockchain network 414 on which any transaction is verified by a consensus among all participants of the node, as has been discussed earlier. Further, the invocation of the smart contract results in invocation of one or multiple types of syscall requests, which are the only interface between the user space 408 and the kernel space 410. In one example, the smart contract is invoked when an update to the common runtime is done by a common runtime developer, who/which may be an organization, party, a consortium, an open-source platform, or an individual developer generating these common runtimes for industrial automation blockchain networks. Such an update is downloaded, along with its associated cryptographic certificate at the computing device 402 in the form of download of most recent block of the blockchain network 414. Before installing or applying it to the computing system 402, invocation of smart contract is done syscalls on the computing system 402. This invocation leads to performance of some operations specified in smart contract, whose results are published back on the blockchain network 414. If these results are verified, the updated common runtime is applied to the computing system 402, and if the results are not verified, then the updated common runtime is not applied, and an error message may be returned on a display associated with the computing device 402. Also, an error notification is sent back to the blockchain network 414, informing about unverified updated being circulated. Accordingly, the blockchain network 414 may be configured for remedial actions.

In one embodiment, the unikernel 410 is implemented as the smart contract which is invoked when an incoming command is received at the computing device 402. The command is then verified by execution of the smart contract and publishing results of the execution of the smart contract on the blockchain network 414 to check if the command is a valid command. If validated as correct, the command is executed, else prevented from execution.

In one embodiment, the unikernel 410a is distributed as blockchain operating system by the blockchain network 414, where majority of the authentication, processing and verification is pushed to the blockchain network 414 cloud, and the computing system 402 performs the basic functions of downloading the most recent block, executing the smart contract, and publishing the results of execution of the smart contract back on the blockchain network 414 cloud. In the blockchain network 414 cloud, the results are verified using one or more known verification algorithms, like proof of work (PoW), proof of stake (PoS), proof of history (in SOLANA® blockchain), delegated proof of stake (dpos), zero-knowledge proof or zk-SNARKS and the like.

The unikernel 410a is accessed through syscalls, which also act as interface of the computing system 402 to the blockchain network 414. In some embodiments, the syscalls Ankur configured as specialized syscalls for access of the blockchain network 414 via the syscalls.

The unikernel 410a, which acts the common runtime for all computing devices connected on the blockchain network 414 acts as a common operating system for all possible hardware from all equipment manufacturers who subscribe to the blockchain network 414. The hardware specific and manufacturer specific OS code is encapsulated in the hardware abstraction layer 410b. The code for the hardware abstraction layer is supplied by the manufacturer, such as the manufacturer of the PLCs (which are the computing devices 402 in this example). This allows PLC manufacturers to retain proprietary functions while still utilizing the trusted common runtime 410a provided through blockchain network 414. In this example, customers or industry owners can buy their PLCs from any vendor and still trust the blockchain network 414 because all participants utilize the same common runtime 410a component.

The implementation of blockchain enabled industrial automation system in the manner described above provides safety and trust guarantee of blockchain technology, scalability by offering ease of adding or removing any number of computing devices 402 without incurring extra computational costs as blockchain related functions are pushed to the network or cloud level, and flexibility to hardware manufacturers like PLC manufacturers to have only proprietary functions configured by them, while leaving trust management to blockchain providers.

FIG. 5A illustrates a flow diagram of a method 500 for managing a blockchain based industrial automation system, according to some embodiments of the present disclosure. The method 500 is implemented by a processor, which is configured to execute computer-readable instructions stored in a memory. For example, the method 500 is implemented by the controller computer 108 shown in FIG. 1A, FIG. 1B, and FIG. 1C, or alternately or additionally by the server computing system 124 shown in FIG. 1C and FIG. 1D.

The method 500 comprises, at step 502, downloading a most recent block from a blockchain network. The blockchain network may be the industrial automation related blockchain network 120. The downloading of the most recent block only and not the entire copy of the blockchain is done to make the computing device executing the method 500, for example the controller computer 108 or the server computing system 124, lightweight. The processing power required for download and storage of only the most recent block of the blockchain network is much lesser as compared to when the entire copy of the blockchain is downloaded. Thus, the method 500 is executed in a much more computationally efficient manner as compared to authentication methods based on download of entire blockchain.

In some embodiments, the downloading of the most recent block is done by invocation of a smart contract on the computing device executing the method 500. This is described previously in conjunction with previous embodiments described above.

In some embodiments, the smart contract is implemented as a common runtime or a unikernel, which accesses the computing resources of the computing device executing the method 500 via one or more syscalls. This has been described in detail in FIG. 4A and FIG. 4B.

In some embodiments, the smart contract acts as the OS controlling the computing device, and the OS is trusted, as it is distributed by a trust based blockchain network.

In some embodiments, the downloaded most recent block is done after an update operation has been initiated by the blockchain network. The update operation may be a firmware update operation or an incoming command execution related operation, for the computing device executing the method 500.

Then, at step 504, the update operation is authenticated based on downloaded most recent block of the blockchain network. The authentication of the most recent block is done by downloading the most recent block along with its associated cryptographic certificate at the computing device executing the method 500, such as the controller computer 108 or the server computing device 124. Before installing or applying this update to the computing device, invocation of smart contract is done via syscalls on the computing device. This invocation leads to performance of some operations specified in smart contract, whose results are published back on the blockchain network. If these results are verified, the update is applied to the computing device, and if the results are not verified, then the update may lead to generation of an error message. This is also explained in detail in FIG. 4A and FIG. 4B.

In one embodiment, when the update operation is related to execution of an incoming command on the computing device, the step 504 may further include some method steps, as illustrated in FIG. 5B.

FIG. 5B illustrates a flow diagram of sub-steps of step or method 504 for authentication of the update operation for managing a blockchain based industrial automation system, according to some embodiments of the present disclosure.

The method 504 comprises, at step 504a, transmitting a device state data in an incoming command to the computing device. The device state data is received from one or more industrial devices, such as industrial devices 102 shown in FIG. 1A, FIG. 1B, FIG. 1C, and FIG. 1D. The incoming command is also illustrated as the incoming command 104 in FIG. 1A and FIG. 1C. To that end, the device state is related to states of operation of a corresponding industrial device 102, which is measured by process parameter data for processes executing at the industrial device 102.

The device state data in the incoming command is authenticated, at step 504b, based on the downloaded most recent block and its associated cryptographic certificate. To that end, the downloaded most recent block comprises data associated with a set of valid commands for the one or more industrial devices 102, and wherein the incoming command is authenticated for execution when the incoming command is included in the set of valid commands. However, if the incoming command and the device state data included in it are not present in the list of valid commands included in the downloaded most recent block, the corresponding incoming command is not validated. Thereby, its further execution is suppressed.

In either way, the result of authentication done at step 504 of the method 500 is used to determine further course of action for the method 500.

To that end, referring back to FIG. 5A, at step 506, a response is generated for controlling an operation based on the authentication done at step 504. The response is generated at the computing device executing the method 500. For example, FIG. 5C describes some additional steps that are performed for generating the response as per method step 506.

The method step 506 comprises, in one embodiment, transmitting a control instruction from the computing device to the one or more industrial devices connected to the computing device. For example, referring to FIG. 1A and FIG. 1C, the responses 106 generated by the at least one controller computer 108 are transmitted to the one or more industrial devices 102. For example, if the authentication at step 504 was successful, then at step 506b, the response includes the control instruction for modifying the device state of the one or more industrial devices based on the control instruction specified in the incoming command. On the other hand, if the authentication at step 504 was not successful, then at step 506b, the response includes preventing execution of the control instruction on the one or more industrial devices 102. This may be done by displaying an error message, generating an alarm, providing an audio notification, providing a video notification, and the like.

In one embodiment, the authentication of the at least one incoming command is performed based on invocation of one or multiple types of system call (syscall) requests. This happens when the computing device executing the method 500 includes a unikernel, and any operation on the computing device is done via the unikernel using syscalls. To that end, the incoming command is at least one of a firmware update command, and an industrial process automation command as described in previous embodiments and are implanted in an industrial automation system. One example of an industrial automation system based on blockchain, is shown in FIG. 6.

FIG. 6 illustrates a use case 600 for a blockchain based industrial automation system, according to an example embodiment of the present disclosure. The use case 600 corresponds to a factory floor that includes one or more industrial devices or manual input operators, such as a line operator 602 and an industrial machine equipped with a sensor 604. The factory floor comprises one or more PLCs, such as a PLC 606 which includes a blockchain based common runtime 606a which is stored in the memory of the PLC 606. The PLC 606 is connected to a factory automation blockchain network 608, via one or more of a wired or a wireless connection. The PLC 606 is also communicatively coupled to the one or more industrial devices or manual input operators, such as the line operator 602 and the industrial machine equipped with the sensor 604 through industrial communication protocols.

In an illustrative example scenario, the PLC 606 downloads the most recent block from the factory automation blockchain network 608. This download leads to invocation of the blockchain based common runtime 606a which further one or more syscalls to access underlying hardware of the PLC 606. Then, the PLC 606 performs an authentication of the downloaded most recent block by recoding the data gathered via syscalls on the factory automation blockchain network 608. The factory automation blockchain network further verifies this data and sends a notification of verification back to the PLC 606. The verification done in the blockchain network 608 uses standard blockchain protocols, like POW, POS, and the like. The PLC 606 checks the result of verification and based on it applies the update on the PLC 606. For example, the update may be a firmware update to update a version of the current common runtime 606a running on the PLC 606.

In this manner, the PLC 606 with limited computing resources, is able to leverage the trust and security provided by the blockchain technology and can trust the firmware provided via the external network, such as the internet.

FIG. 7 illustrates an exemplar use case 700 for implementation of an industrial automation system based on blockchain technology for verifiable computing, according to some embodiments of the present disclosure.

The use case 700 corresponds to a factory floor that includes one or more industrial devices 704 manufacturing a product 702. The factory floor comprises one or more PLCs, such as a PLC 706 which includes a blockchain based common runtime 706a which is stored in the memory of the PLC 706. The PLC 706 is connected to a factory automation blockchain network 710, via one or more of a wired or a wireless connection. The PLC 706 is configured to download a verification contract 708 from the factory automation blockchain network 710 for execution of verifiable computing commands. The PLC 706 is also communicatively coupled to the one or more industrial devices 704 industrial communication protocols.

In an illustrative example scenario, the PLC 706 downloads the most recent block from the factory automation blockchain network 710, which includes the most recent copy of the verification contract 708. This download leads to invocation of the blockchain based common runtime 706a which further executes one or more syscalls to access underlying hardware of the PLC 706. Then, the PLC 706 performs an authentication of the downloaded most recent block by recoding the data gathered via syscalls on the factory automation blockchain network 710. The factory automation blockchain network 710 further verifies this data and sends a notification of verification back to the PLC 706. The verification done in the blockchain network 710 uses standard blockchain protocols, like POW, POS, and the like. The PLC 706 checks the result of verification and based on it applies the update on the PLC 706. For example, the update may be approving a state sequence for the industrial device and accordingly performing a machining operation on the product 702, as per a verifiable computing execution commands.

The state sequence corresponds to a device state data for the industrial device 704. A valid state sequence is identified based on the downloaded verification contract 708.

At a high level, verifiable computing is typically concerned with the following interaction between three parties. A client specifies a function f to be computed and provides the input data, denoted x. A server computes $f(x)$. Finally, a verifier checks the correctness of the result, i.e., that $y = f(x)$. A verifiable computing scheme enables clients to generate cryptographic objects that both the server and the verifier use to convince the client that the computation was carried out correctly. In typical settings considered in verifiable computing, the function f and the input x to be verified differ with every instance of the problem. This reflects the typical workload encountered in a cloud computing setting, i.e., many singular computations from different users. However, workloads found in a manufacturing setting, such as on the factory floor illustrated in the use case 700, however, consist of repeated applications of the same function, i.e., some physical transformation f, to many identical but uniquely identifiable instances of an input $x_i$, where i is within a finite set of possibilities. A direct application of verifiable computing to the manufacturing setting is infeasible since a cryptographic proof would be generated for each product 702 on a manufacturing line. Each proof, while not identical, due to the entropy, would be functionally redundant since each proof verifies the same function on the same input. Generating verifiable proofs for each product with identical specifications is computationally wasteful, adding possibly intolerable latency to the manufacturing process and unnecessarily increasing the storage requirements by retaining a redundant proof for each manufactured product.

However, the blockchain based factory automation network 710 helps to reduce this wasteful computation and storage requirements by making this a blockchain-based verifiable computing system for manufacturing processes. Two main components comprise this blockchain-based verifiable computing system: verifiability at the industrial device 704 level and the permissioned blockchain network 710, that reduces the computational cost of verification at the industrial device 704 level.

Verifiability at the industrial device 704 level is achieved by ensuring verifiability of controllers, i.e., the PLCs 706 in the control level of the hierarchy of industrial automation. Factory automation blockchain network 710 is used to enable the use of a single proof for verifying all items manufactured according to the same specifications. This verifiability is often desirable because otherwise manufacturing companies have no visibility into the manufacturing processes employed by their suppliers. Suppliers are essentially black boxes that provide a product that conforms to a specification. Errors in industrial automation typically have an outsize impact as they lead to physical faults. For example, small errors in configuration, nearly impossible to detect, can be extremely costly for downstream OEMs (original equipment manufacturers); for this reason, downstream OEMs typically expend additional effort to test upstream products, in order to ensure specifications.

Industrial devices 704 possess a finite number of atomic operations, each of which can be modeled as a state in a finite state machine. A sequence of states, or "state sequence", corresponds to the industrial device 704 effecting a physical transformation, i.e., there is a one-to-one relationship between a state sequence and a physical transformation. For these reasons, while a state sequence is equivalent to a physical transformation, the state transitions occur on the PLC 706 and not on the industrial device 704 . As the PLC 706 transitions through the states of a state sequence, it instructs the corresponding industrial device 704 to perform an operation.

Concurrently, or after the operation is completed, the industrial device 704 returns device state information to the PLC 706 such as feedback on the current state of the industrial device 704, whether the industrial device 704 encountered an error performing the operation, the configuration of the industrial device 704, etc. The PLC 706 uses this information to determine whether or not to transition to the subsequent state.

Thus, enabling verifiability of a manufacturing process executed by the industrial device 704.

Generally, the physical transformations performed by the industrial device 704 are implemented using state sequence circuits. State sequences are digital representations of physical transformations within a manufacturing setting. Consequently, physical manufacturing processes can be made verifiable by making state sequences verifiable. Also, the industrial devices 704 can be modeled as finite state machines, it follows that state sequences can be modeled as sequences of a finite number of integers,

$$s = s_0, s_1, \ldots, s_n;$$

where $s_i \in \mathbb{Z}$ for i = 0, ..., n, and n denotes the total number of states in the state sequence. However, representing a state sequence only as a series of integers is insufficient since, in many cases, additional information from the industrial device 704 that is not inferred from its current state must also be verified. For example, it is often necessary, at the beginning of a manufacturing run, to ensure that an industrial device is operating with the correct configuration. Industrial devices, in many cases, can also return this information as a string, which can represent a configuration ID or a hash of the configuration. Note that auxiliary information is only useful at certain stages of an industrial device's operation. That is, auxiliary information should be coupled with the states of an industrial device. Thus, it is natural to define a state sequence to be a series of tuples, as in the following.

A state sequence is a digital representation of a physical transformation directed by a PLC and is represented as a sequence of tuples,

$$s = (s_0, a_0), \ldots, (s_n, a_n)$$

where $a_i$ the auxiliary data, can be either an integer, a string,
or empty for any i = 0, ... , n.

These sate sequences are converted to arithmetic circuits in order to be properly distributed to participants, such as the PLCs 706. A verifiable proof by itself does not enable the verifiability of manufacturing processes. Assuming that the verifiable proof is in some trusted shared location or distributed to the verifier, the prover, i.e., PLC 706, could send a copy of the state sequence to the verifier. However, this would not implement important aspects of verification, such as immutable records of an attempt at verification of a physical transformation applied to a physical object and subsequent results, and these aspects are certainly possible using the factory automation blockchain network 710 for distribution of verification contracts 708 containing embedded in it the verifiable proof to be verified by the PLC 706. Moreover, without a common network built on top of factory automation blockchain network 710, the possibility exists that the manufacturer would be able to equivocate its results by sending different verifiable proofs to different parties. For these reasons, blockchain is a necessary component for the application of verifiable computing to physical manufacturing processes.

In some embodiments, the verifiable proofs are embedded within smart contracts, which are distributed as the verification contracts 708. As is known, smart contracts are programs that are stored and run on the blockchain; they have their own address and are invoked by sending transactions to their address; they are stored on and executed by every full node participating in the blockchain network. Combining a verifiable proof and a smart contract obviates the need to manage keys associated with a verifiable proof and the need to trust that all participants have received the same verifiable proof.

In some embodiments a PLC program is onto the PLC 706 at step 712, which begins instructing the industrial device 704 . Then, at 714, the product 702 is fed to the industrial device 704. The industrial device 704, at 716, applies the physical transformation to the manufactured product; simultaneously, the industrial device 704 send feedback to the PLC 706 on its operating state and any other auxiliary information. When the state sequence is complete, the PLC 706, at 718 forwards the state sequence to the network 710 for verification by invoking the verification contract 708. Only the results of verification and a unique identifier for the manufactured item are written onto the blockchain network 710, at 718. The item then progresses through the manufacturing line to the next industrial device 704.

Thus, in this manner backed by a permissioned blockchain network 710, the industrial devices 704 can be made verifiable through the verifiability of control devices. This is done by verifying the physical transformation in the form of device state data including verification of state sequences representing physical transformations. The proof of verification in the form of the most recent copy of verification contract is downloaded from the blockchain network 710.

Thus, the various embodiments described herein provide a secure, trust based, efficient, reliable, scalable, modular, and cost-effective industrial automation system. Further, the fact that a lightweight client may as easily be used to implement the various techniques described herein, as a full embedded blockchain node, makes the overall system highly efficient, scalable, and cost effective. Moreover, the existence of the lightweight client also provides implementation of a suitable edge computing architecture on the industrial automation system.

The above description provides exemplary embodiments only, and is not intended to limit the scope, applicability, or configuration of the disclosure. Rather, the above description of the exemplary embodiments will provide those skilled in the art with an enabling description for implementing one or more exemplary embodiments. Contemplated are various changes that may be made in the function and arrangement of elements without departing from the spirit and scope of the subject matter disclosed as set forth in the appended claims.

Specific details are given in the above description to provide a thorough understanding of the embodiments. However, understood by one of ordinary skill in the art may be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.

Also, individual embodiments may be described as a process which is depicted as a flowchart, a flow diagram, a data flow diagram, a structure diagram, or a block diagram. Although a flowchart may describe the operations as a sequential process, many of the operations may be performed in parallel or concurrently. In addition, the order of the operations may be re-arranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination may correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments. Although the present disclosure has been described with reference to certain preferred embodiments, it is to be understood that various other adaptations and modifications may be made within the scope of the present disclosure. Therefore, it is the aspect of the append claims to cover all such variations and modifications as come within the true spirit and scope of the present disclosure.

**Claims**

1. A blockchain-based industrial automation system (100a, 100b, 100c, 100d) having access to a blockchain network (120), the blockchain-based industrial automation system comprising:
   at least one controller computer (108, 108a, 108b) including:

   at least one processor (110); and
   a memory (112) having stored thereon instructions that, when executed by the at least one processor, cause the at least one controller computer to, after an update operation has been initiated by the blockchain network, wherein the update operation is an incoming command:

   download only a most recent block and an associated cryptographic certificate of the most recent block from the blockchain network, wherein the cryptographic certificate is configured to be used to authenticate the block with which it is associated;
   authenticate the most recent block using the cryptographic certificate;
   authenticate the incoming command, wherein to authenticate the incoming command, the at least one controller computer is configured to check if the incoming command (104, 104a-c) is included in a list of valid commands included in the downloaded most recent block; and
   generate a response (106, 106b) based on the authentication of the incoming command, wherein when the authentication is successful the response includes a control instruction for modifying a device state of one or more industrial devices based on a control instruction specified in the incoming command, and when the authentication is not successful the response includes preventing execution of the control instruction on the one or more industrial devices.

2. The blockchain-based industrial automation system (100a, 100b, 100c, 100d) of claim 1, further comprising:
one or more industrial devices (102, 102a, 102b, 102n), wherein the one or more industrial devices are each configured to transmit device state data to the at least one controller computer (108, 108a, 108b), wherein the device state data is associated with the incoming command (104, 104a-c).

3. The blockchain-based industrial automation system (100a, 100b, 100c, 100d) of claim 2, wherein the one or more industrial devices (102, 102a, 102b, 102n) comprise one or more of a sensor device, and an actuator device.

4. The blockchain-based industrial automation system (100a, 100b, 100c, 100d) of claim 1, wherein the incoming command (104, 104a-c) is a firmware update command or an industrial automation process execution command.

5. The blockchain-based industrial automation system (100a, 100b, 100c, 100d) of claim 1, wherein the memory (112) comprises a unikernel for storing the instructions, and optionally wherein the unikernel is associated with an edge computing architecture.

6. The blockchain-based industrial automation system (100a, 100b, 100c, 100d) of claim 1, wherein the at least one controller computer (108, 108a, 108b) is configured to exchange messages with the blockchain network (120) using a communication protocol relying on a protocol of the blockchain network, wherein optionally the protocol is a protocol of a permissioned blockchain network.

7. The blockchain-based industrial automation system (100a, 100b, 100c, 100d) of claim 1, wherein the authentication of the update operation is performed based on invocation of one or multiple types of system call, syscall, requests.

8. A blockchain-based industrial automation system (100a, 100b, 100c, 100d) having access to a blockchain network (120), the blockchain-based industrial automation system comprising:

a server computing system (124);
at least one controller computer (108, 108a, 108b);
wherein the at least one controller computer (108, 108a, 108b) is configured to transmit an incoming command (104, 104a-c) to the server computing system, and the server computing system is configured to :

download only a most recent block and an associated cryptographic certificate of the most recent block from the blockchain network (120), wherein the cryptographic certificate is configured to be used to authenticate the block with which it is associated;
authenticate the most recent block using the cryptographic certificate;
authenticate the incoming command, wherein to authenticate the incoming command, the server computing system is configured to check if the incoming command (104, 104a-c) is included in a list of valid commands included in the downloaded most recent block; and
generate a response (106, 106b) based on the authentication, wherein when the authentication is successful the response includes a control instruction for modifying a device state of one or more industrial devices based on a control instruction specified in the incoming command, and when the authentication is not successful the response includes preventing execution of the control instruction on the one or more industrial devices.

9. A method (500) for providing blockchain-based industrial automation, the method comprising, after an update operation has been initiated by a blockchain network (120), wherein the update operation is an incoming command:

downloading (502) only a most recent block and an associated cryptographic certificate of the most recent block from the blockchain network, wherein the cryptographic certificate is configured to be used to authenticate the block with which it is associated;
authenticating the most recent block using the cryptographic certificate;
authenticating (504, 504a, 504b) the incoming command, wherein to authenticate the update operation, the at least one controller computer is configured to check if the incoming command (104, 104a-c) is included in a list of valid commands included in the downloaded most recent block; and
generate (506, 506b) a response (106, 106b) based on the authentication; wherein when the authentication is successful the response includes a control instruction for modifying a device state of one or more industrial devices based on a control instruction specified in the incoming command, and when the authentication is not successful the response includes preventing execution of the control instruction on the one or more industrial devices.

10. The method (500) of claim 9, wherein authenticating the incoming command comprises:

transmitting device state data in the incoming command (104, 104a-c), from one or more industrial devices (102, 102a, 102b, 102n) to the at least one controller computer (108, 108a, 108b); and
authenticating the incoming command based on the device state data and the downloaded most recent block and the associated cryptographic certificate.

11. The method (500) of claim 10, wherein the list of valid commands is for the one or more industrial devices (102, 102a, 102b, 102n), and wherein the incoming command (104, 404a-c) is authenticated for execution when the incoming command is included in the list of valid commands.

12. The method (500) of claim 11, wherein generating the response for controlling the operation on the at least one controller computer (108, 108a, 108b) comprises allowing transmission of a control instruction from the at least one controller computer to the one or more industrial devices (102, 102a, 102b, 102n), wherein the control instruction is associated with modification of the device state of data of the one or more industrial devices.

13. A non-transitory computer readable storage medium embodied thereon a program executable by a processor for performing a method (500) for blockchain based industrial automation, the method comprising, after an update operation has been initiated by the blockchain network, wherein the update operation is an incoming:

downloading (502) only a most recent block and an associated cryptographic certificate of the most recent block from a blockchain network, wherein the cryptographic certificate is configured to be used to authenticate the block with which it is associated;
authenticating the most recent block using the cryptographic certificate
authenticating (504, 504a, 504b) an update operation of at least one controller computer (108, 108a, 108b), wherein to authenticate the update operation, the at least one controller computer is configured to check if the incoming command (104, 104a-c) is included in a list of valid commands included in the downloaded most recent block; and
generating (506, 506b) a response based on the authentication; wherein when the authentication is successful the response includes a control instruction for modifying a device state of one or more industrial devices based on a control instruction specified in the incoming command, and when the authentication is not successful the response includes preventing execution of the control instruction on the one or more industrial devices.

**Patentansprüche**

1. Blockchain-basiertes industrielles Automatisierungssystem (100a, 100b, 100c, 100d) mit Zugang zu einem Blockchain-Netzwerk (120), wobei das Blockchain-basierte industrielle Automatisierungssystem umfasst:
zumindest einen Controller-Computer (108, 108a, 108b), umfassend:

zumindest einen Prozessor (110); und
einen Speicher (112), in dem Anweisungen gespeichert sind, die, wenn sie von dem mindestens einen Prozessor ausgeführt werden, den mindestens einen Controller-Computer dazu veranlassen, nachdem eine Aktualisierungsoperation von dem Blockchain-Netzwerk initiiert wurde, wobei die Aktualisierungsoperation ein eingehender Befehl ist; nur einen letzten Block und ein zugeordnetes kryptografisches Zertifikat des letzten Blocks von dem Blockchain-Netzwerk herunterzuladen, wobei das kryptografische Zertifikat konfiguriert ist, genutzt zu werden, um den Block zu authentifizieren, welchem es zugeordnet ist;
den letzten Block anhand des kryptografischen Zertifikats zu authentifizieren;
den eingehenden Befehl zu authentifizieren, wobei zur Authentifizierung des eingehenden Befehls der mindestens eine Controller-Computer konfiguriert ist, zu überprüfen, ob der eingehende Befehl (104, 104a-c) in einer Liste gültiger Befehle enthalten ist, die in dem heruntergeladenen letzten Block enthalten ist; und
eine Antwort (106, 106b) auf der Grundlage der Authentifizierung des eingehenden Befehls zu erzeugen, wobei, wenn die Authentifizierung erfolgreich ist, die Antwort eine Steueranweisung zum Modifizieren eines Einrichtungszustands eines oder mehrerer industrieller Einrichtungen auf der Grundlage einer im eingehenden Befehl spezifizierten Steueranweisung enthält, und wenn die Authentifizierung nicht erfolgreich ist, die Antwort das Verhindern einer Ausführung der Steueranweisung auf die eine oder die mehreren industriellen Einrichtungen enthält.

2. Blockchain-basiertes industrielles Automatisierungssystem (100a, 100b, 100c, 100d) nach Anspruch 1, ferner umfassend: eine oder mehrere industrielle Einrichtungen (102, 102a, 102b, 102n), wobei die eine oder mehreren industriellen Einrichtungen jeweils konfiguriert sind, Einrichtungszustandsdaten an den mindestens einen Controller-Computer (108, 108a, 108b) zu übertragen, wobei die Einrichtungszustandsdaten dem eingehenden Befehl (104, 104a-c) zugeordnet sind.

3. Blockchain-basiertes industrielles Automatisierungssystem (100a, 100b, 100c, 100d) nach Anspruch 2, wobei die eine oder die mehreren industriellen Einrichtungen (102, 102a, 102b, 102n) eine oder mehrere von einer Sensoreinrichtung und einer Aktuatoreinrichtung umfassen.

4. Blockchain-basiertes industrielles Automatisierungssystem (100a, 100b, 100c, 100d) nach Anspruch 1, wobei der eingehende Befehl (104, 104a-c) ein Firmware-Aktualisierungsbefehl oder ein Befehl zur Ausführung eines industriellen Automatisierungsprozesses ist.

5. Blockchain-basiertes industrielles Automatisierungssystem (100a, 100b, 100c, 100d) nach Anspruch 1, wobei der Speicher (112) einen Unikernel zum Speichern der Anweisungen umfasst, und wobei der Unikernel optional einer Edge-Computing-Architektur zugeordnet ist.

6. Blockchain-basiertes industrielles Automatisierungssystem (100a, 100b, 100c, 100d) nach Anspruch 1, wobei der mindestens eine Controller-Computer (108, 108a, 108b) konfiguriert ist, Nachrichten mit dem Blockchain-Netzwerk (120) unter Verwendung eines Kommunikationsprotokolls auszutauschen, das sich auf ein Protokoll des Blockchain-Netzwerks stützt, wobei das Protokoll optional ein Protokoll eines zugangsbeschränkten Blockchain-Netzwerks ist.

7. Blockchain-basiertes industrielles Automatisierungssystem (100a, 100b, 100c, 100d) nach Anspruch 1, wobei die Authentifizierung der Aktualisierungsoperation auf der Grundlage des Aufrufs einer oder mehrerer Typen von Systemaufruf-, Syscall-, -Anforderungen erfolgt.

8. Blockchain-basiertes industrielles Automatisierungssystem (100a, 100b, 100c, 100d) mit Zugang zu einem Blockchain-Netzwerk (120), wobei das Blockchain-basierte industrielle Automatisierungssystem umfasst:

ein Server-Rechensystem (124); zumindest einen Controller-Computer (108, 108a, 108b); wobei der mindestens eine Controller-Computer (108, 108a, 108b) konfiguriert ist, einen eingehenden Befehl (104, 104a-c) an das Server-Rechensystem zu übertragen, und das Server-Rechensystem dazu konfiguriert ist:

nur einen letzten Block und ein zugeordnetes kryptografisches Zertifikat des letzten Blocks von dem Blockchain-Netzwerk (120) herunterzuladen, wobei das kryptografische Zertifikat konfiguriert ist, genutzt zu werden, um den Block zu authentifizieren, welchem es zugeordnet ist; den letzten Block anhand des kryptografischen Zertifikats zu authentifizieren; den eingehenden Befehl zu authentifizieren, wobei zur Authentifizierung des eingehenden Befehls das Server-Rechensystem konfiguriert ist, zu überprüfen, ob der eingehende Befehl (104, 104a-c) in einer Liste gültiger Befehle enthalten ist, die in dem heruntergeladenen letzten Block enthalten ist; und eine Antwort (106, 106b) auf der Grundlage der Authentifizierung zu erzeugen, wobei, wenn die Authentifizierung erfolgreich ist, die Antwort eine Steueranweisung zum Modifizieren eines Einrichtungszustands eines oder mehrerer industrieller Einrichtungen auf der Grundlage einer im eingehenden Befehl spezifizierten Steueranweisung enthält, und wenn die Authentifizierung nicht erfolgreich ist, die Antwort das Verhindern einer Ausführung der Steueranweisung auf die eine oder die mehreren industriellen Einrichtungen enthält.

9. Verfahren (500) zum Bereitstellen einer Blockchain-basierten industriellen Automatisierung, wobei das Verfahren umfasst, nachdem eine Aktualisierungsoperation durch ein Blockchain-Netzwerk (120) initiiert wurde, wobei der Aktualisierungsvorgang ein eingehender Befehl ist;

Herunterladen (502) nur eines letzten Blocks und eines zugeordneten kryptografischen Zertifikats des letzten Blocks aus dem Blockchain-Netzwerk, wobei das kryptografische Zertifikat konfiguriert ist, genutzt zu werden, um den Block zu authentifizieren, welchem es zugeordnet ist;

Authentifizieren des letzten Blocks anhand des kryptografischen Zertifikats;

Authentifizieren (504, 504a, 504b) des eingehenden Befehls, wobei zur Authentifizierung der Aktualisierungsoperation der mindestens eine Controller-Computer konfiguriert ist, zu überprüfen, ob der eingehende Befehl (104, 104a-c) in einer Liste gültiger Befehle enthalten ist, die in dem heruntergeladenen letzten Block enthalten ist; und

eine Antwort (106, 106b) auf der Grundlage der Authentifizierung zu erzeugen (506, 506b); wobei, wenn die Authentifizierung erfolgreich ist, die Antwort eine Steueranweisung zum Modifizieren eines Einrichtungszustands eines oder mehrerer industrieller Einrichtungen auf der Grundlage einer im eingehenden Befehl spezifizierten Steueranweisung enthält, und wenn die Authentifizierung nicht erfolgreich ist, die Antwort das Verhindern einer Ausführung der Steueranweisung auf die eine oder die mehreren industriellen Einrichtungen enthält.

10. Verfahren (500) nach Anspruch 9, wobei das Authentifizieren des eingehenden Befehls umfasst:

Übertragen von Einrichtungszustandsdaten in dem eingehenden Befehl (104, 104a-c), aus einer oder mehreren Einrichtungen (102, 102a, 102b, 102n), an den mindestens einen Controller-Computer (108, 108a, 108b); und Authentifizieren des eingehenden Befehls auf der Grundlage der Einrichtungszustandsdaten und des heruntergeladenen letzten Blocks sowie des zugeordneten kryptografischen Zertifikats.

11. Verfahren (500) nach Anspruch 10, wobei die Liste gültiger Befehle für das eine oder die mehreren industriellen Einrichtungen (102, 102a, 102b, 102n) ist, und wobei der eingehende Befehl (104, 404a-c) zur Ausführung authentifiziert wird, wenn der eingehende Befehl in der Liste gültiger Befehle enthalten ist.

12. Verfahren (500) nach Anspruch 11, wobei das Erzeugen der Antwort zum Steuern der Operation auf den mindestens einen Controller-Computer (108, 108a, 108b) das Zulassen von Übertragung einer Steueranweisung von dem zumindest einen Controller-Computer an die eine oder die mehreren industriellen Einrichtungen (102, 102a, 102b, 102n) umfasst, wobei die Steueranweisung einer Modifikation des Einrichtungszustands von Daten über die eine oder die mehreren industriellen Einrichtungen zugeordnet ist.

13. Nicht-transitorisches, computerlesbares Speichermedium, auf dem ein von einem Prozessor ausführbares Programm zum Durchführen eines Verfahrens (500) für Blockchain-basierte industrielle Automatisierung verkörpert ist, wobei das Verfahren umfasst, nachdem eine Aktualisierungsoperation durch das Blockchain-Netzwerk initiiert wurde, wobei die Aktualisierungsoperation ein eingehender Befehl ist;

Herunterladen (502) nur eines letzten Blocks und eines zugeordneten kryptografischen Zertifikats des letzten Blocks aus einem Blockchain-Netzwerk, wobei das kryptografische Zertifikat konfiguriert ist, genutzt zu werden, um den Block zu authentifizieren, welchem es zugeordnet ist;

Authentifizieren des letzten Blocks anhand des kryptografischen Zertifikats;

Authentifizieren (504, 504a, 504b) einer Aktualisierungsoperation auf zumindest einen Controller-Computer (108, 108a, 108b), wobei zur Authentifizierung der Aktualisierungsoperation der mindestens eine Controller-Computer konfiguriert ist, zu überprüfen, ob der eingehende Befehl (104, 104a-c) in einer Liste gültiger Befehle enthalten ist, die in dem heruntergeladenen letzten Block enthalten ist; und

Erzeugen (506, 506b) einer Antwort auf der Grundlage der Authentifikation; wobei, wenn die Authentifizierung erfolgreich ist, die Antwort eine Steueranweisung zum Modifizieren eines Einrichtungszustands eines oder mehrerer industrieller Einrichtungen auf der Grundlage einer im eingehenden Befehl spezifizierten Steueranweisung enthält, und wenn die Authentifizierung nicht erfolgreich ist, die Antwort das Verhindern einer Ausführung der Steueranweisung auf die eine oder die mehreren industriellen Einrichtungen enthält.

**Revendications**

1. Système d'automatisation industrielle à base de chaîne de blocs (100a, 100b, 100c, 100d) ayant accès à un réseau de chaîne de blocs (120), le système d'automatisation industrielle à base de chaîne de blocs comprenant :
au moins un ordinateur contrôleur (108, 108a, 108b) incluant :

au moins un processeur (110) ; et une mémoire (112) sur laquelle sont stockées des instructions qui, lorsqu'elles sont exécutées par le au moins un processeur, amènent le au moins un ordinateur contrôleur, après qu'une opération de mise à jour a été initiée par le réseau de chaîne de blocs, dans lequel l'opération de mise à jour est une commande entrante, à :

télécharger uniquement un bloc le plus récent et un certificat cryptographique associé du bloc le plus récent à partir du réseau de chaîne de blocs, le certificat cryptographique étant configuré pour être utilisé pour authentifier le bloc auquel il est associé ;
authentifier le bloc le plus récent en utilisant le certificat cryptographique ;
authentifier la commande entrante, dans lequel pour authentifier la commande entrante, le au moins un ordinateur contrôleur est configuré pour vérifier si la commande entrante (104, 104a-c) est incluse dans une liste de commandes valides incluses dans le bloc le plus récent téléchargé ; et
générer une réponse (106, 106b) sur la base de l'authentification de la commande entrante, dans lequel lorsque l'authentification est réussie, la réponse inclut une instruction de contrôle pour modifier un état de dispositif d'un ou plusieurs dispositifs industriels sur la base d'une instruction de contrôle spécifiée dans la commande entrante, et lorsque l'authentification n'est pas réussie, la réponse inclut un empêchement de l'exécution de l'instruction de contrôle sur les un ou plusieurs dispositifs industriels.

2. Système d'automatisation industrielle à base de chaîne de blocs (100a, 100b, 100c, 100d) selon la revendication 1, comprenant en outre :
un ou plusieurs dispositifs industriels (102, 102a, 102b, 102n), dans lequel les un ou plusieurs dispositifs industriels sont chacun configurés pour transmettre des données d'état de dispositif au au moins un ordinateur contrôleur (108, 108a, 108b), dans lequel les données d'état de dispositif sont associées à la commande entrante (104, 104a-c).

3. Système d'automatisation industrielle à base de chaîne de blocs (100a, 100b, 100c, 100d) selon la revendication 2, dans lequel les un ou plusieurs dispositifs industriels (102, 102a, 102b, 102n) comprennent un ou plusieurs parmi un dispositif capteur et un dispositif actionneur.

4. Système d'automatisation industrielle à base de chaîne de blocs (100a, 100b, 100c, 100d) selon la revendication 1, dans lequel la commande entrante (104, 104a-c) est une commande de mise à jour de micrologiciel ou une commande d'exécution de processus d'automatisation industrielle.

5. Système d'automatisation industrielle à base de chaîne de blocs (100a, 100b, 100c, 100d) selon la revendication 1, dans lequel la mémoire (112) comprend un unikernel pour stocker les instructions, et facultativement dans lequel l'unikernel est associé à une architecture informatique de pointe.

6. Système d'automatisation industrielle à base de chaîne de blocs (100a, 100b, 100c, 100d) selon la revendication 1, dans lequel le au moins un ordinateur contrôleur (108, 108a, 108b) est configuré pour échanger des messages avec le réseau de chaîne de blocs (120) en utilisant un protocole de communication reposant sur un protocole du réseau de chaîne de blocs, dans lequel facultativement le protocole est un protocole d'un réseau de chaîne de blocs autorisé.

7. Système d'automatisation industrielle à base de chaîne de blocs (100a, 100b, 100c, 100d) selon la revendication 1, dans lequel l'authentification de l'opération de mise à jour est effectuée sur la base de l'invocation d'un ou de plusieurs types de demandes d'appel système, syscall.

8. Système d'automatisation industrielle à base de chaîne de blocs (100a, 100b, 100c, 100d) ayant accès à un réseau de chaîne de blocs (120), le système d'automatisation industrielle à base de chaîne de blocs comprenant :

un système informatique serveur (124) ;
au moins un ordinateur contrôleur (108, 108a, 108b) ;
dans lequel le au moins un ordinateur contrôleur (108, 108a, 108b) est configuré pour transmettre une commande entrante (104, 104a-c) au système informatique serveur, et le système informatique serveur est configuré pour :

télécharger uniquement un bloc le plus récent et un certificat cryptographique associé du bloc le plus récent à partir du réseau de chaîne de blocs (120), dans lequel le certificat cryptographique est configuré pour être utilisé pour authentifier le bloc auquel il est associé ;
authentifier le bloc le plus récent en utilisant le certificat cryptographique ;
authentifier la commande entrante, dans lequel pour authentifier la commande entrante, le système informatique serveur est configuré pour vérifier si la commande entrante (104, 104a-c) est incluse dans une liste de commandes valides incluses dans le bloc le plus récent téléchargé ; et
générer une réponse (106, 106b) sur la base de l'authentification, dans lequel lorsque l'authentification est réussie, la réponse inclut une instruction de contrôle pour modifier un état de dispositif d'un ou plusieurs dispositifs industriels sur la base d'une instruction de contrôle spécifiée dans la commande entrante, et lorsque l'authentification n'est pas réussie, la réponse inclut un empêchement de l'exécution de l'instruction de contrôle sur les un ou plusieurs dispositifs industriels.

9. Procédé (500) pour fournir une automatisation industrielle à base de chaîne de blocs, le procédé comprenant, après qu'une opération de mise à jour a été initiée par un réseau de chaîne de blocs (120), l'opération de mise à jour étant une commande entrante, les étapes consistant à :

télécharger (502) uniquement un bloc le plus récent et un certificat cryptographique associé du bloc le plus récent à partir du réseau de chaîne de blocs, dans lequel le certificat cryptographique est configuré pour être utilisé pour authentifier le bloc auquel il est associé ; authentifier le bloc le plus récent en utilisant le certificat cryptographique ; authentifier (504, 504a, 504b) la commande entrante, dans lequel pour authentifier l'opération de mise à jour, le au moins un ordinateur contrôleur est configuré pour vérifier si la commande entrante (104, 104a-c) est incluse dans une liste de commandes valides incluses dans le bloc le plus récent téléchargé ; et générer (506, 506b) une réponse (106, 106b) sur la base de l'authentification ; dans lequel lorsque l'authentification est réussie, la réponse inclut une instruction de contrôle pour modifier un état de dispositif d'un ou plusieurs dispositifs industriels sur la base d'une instruction de contrôle spécifiée dans la commande entrante, et lorsque l'authentification n'est pas réussie, la réponse inclut un empêchement de l'exécution de l'instruction de contrôle sur les un ou plusieurs dispositifs industriels.

10. Procédé (500) selon la revendication 9, dans lequel l'authentification de la commande entrante comprend les étapes consistant à :

transmettre des données d'état de dispositif dans la commande entrante (104, 104a-c), depuis un ou plusieurs dispositifs industriels (102, 102a, 102b, 102n) vers le au moins un ordinateur contrôleur (108, 108a, 108b) ; et authentifier la commande entrante sur la base des données d'état de dispositif et du bloc le plus récent téléchargé et du certificat cryptographique associé.

11. Procédé (500) selon la revendication 10, dans lequel la liste de commandes valides est pour les un ou plusieurs dispositifs industriels (102, 102a, 102b, 102n), et dans lequel la commande entrante (104, 404a-c) est authentifiée pour une exécution lorsque la commande entrante est incluse dans la liste de commandes valides.

12. Procédé (500) selon la revendication 11, dans lequel la génération de la réponse pour commander le fonctionnement sur le au moins un ordinateur contrôleur (108, 108a, 108b) comprend une autorisation de transmission d'une instruction de contrôle à partir du au moins un ordinateur contrôleur vers les un ou plusieurs dispositifs industriels (102, 102a, 102b, 102n), dans lequel l'instruction de contrôle est associée à une modification de l'état de dispositif de données des un ou plusieurs dispositifs industriels.

13. Support de stockage non transitoire lisible par ordinateur sur lequel réside un programme exécutable par un processeur pour mettre en œuvre un procédé (500) d'automatisation industrielle à base de chaîne de blocs, le procédé comprenant, après qu'une opération de mise à jour a été initiée par le réseau de chaîne de blocs, l'opération de mise à jour étant une opération entrante, les étapes consistant à :

télécharger (502) uniquement un bloc le plus récent et un certificat cryptographique associé du bloc le plus récent à partir d'un réseau de chaîne de blocs, dans lequel le certificat cryptographique est configuré pour être utilisé pour authentifier le bloc auquel il est associé ; authentifier le bloc le plus récent en utilisant le certificat cryptographique, authentifier (504, 504a, 504b) une opération de mise à jour d'au moins un ordinateur contrôleur (108, 108a, 108b), dans lequel pour authentifier l'opération de mise à jour, le au moins un ordinateur contrôleur est configuré pour vérifier si la commande entrante (104, 104a-c) est incluse dans une liste de commandes valides incluses dans le bloc le plus récent téléchargé ; et générer (506, 506b) une réponse basée sur l'authentification ; dans lequel lorsque l'authentification est réussie, la réponse inclut une instruction de contrôle pour modifier un état de dispositif d'un ou plusieurs dispositifs industriels sur la base d'une instruction de contrôle spécifiée dans la commande entrante, et lorsque l'authentification n'est pas réussie, la réponse inclut un empêchement de l'exécution de l'instruction de contrôle sur les un ou plusieurs dispositifs industriels.

# FIG.1A

INCOMING COMMANDS 104

100a

102a

ID1

102b

ID2

102n

IDn

104a

104b

104c

106a

106b

106c

INDUSTRIAL DEVICES 102

RESPONSES 106

114

108

CONTROLLER COMPUTER

INPUT

PROCESSOR 110

MEMORY 112

BUS 118

116

OUTPUT

120

Blockchain Network

EP 4 359 954 B1

# FIG.1B

EP 4 359 954 B1

# FIG.1C

INCOMING COMMANDS 104

100c

102a

ID1

102b

ID2

102n

IDn

INDUSTRIAL
DEVICES 102

RESPONSES
106

104a

106a 104b

104c 106b

106c

108

CONTROLLER COMPUTER

PROCESSOR 110

MEMORY 112

124

SERVER
COMPUTING
SYSTEM

120

Block-
chain
Network

EP 4 359 954 B1

# FIG.1D

100d

102a

Sensors

108a

PLC

Web Clients

124

Centralized
SCADA
Server

122

102b

Manual
Inputs

108b

PLC

Web Clients

SCADA
Database

126

EP 4 359 954 B1

## FIG.2

EP 4 359 954 B1

200

212

Industrial PCs

206

Supervisory Level

210

PLCs

204

Control Level

208

Sensors and Actuators

202

Field Level

FIG.3

# FIG.4A

402

```
┌─────────────────────────────────────────────────────────────┐
│                                                               │
│   ┌ ─ ─ ─ ─ ─ ─ ─ ─ ─ ─ ─ ─ ─ ─ ─ ─ ─ ─ ─ ─ ─ ┐    ┌───────┐ │
│   │              MEMORY 404                      │    │       │ │
│   │                                              │    │       │ │
│   │   ┌──────────────────────────────────────┐  │    │       │ │
│   │   │            USER SPACE                 │  │    │       │ │
│   │   │              408                      │  │    │PROCESSOR│
│   │   └──────────────────────────────────────┘  │    │  406  │ │
│   │       │                          ▲           │    │       │ │
│   │       │       syscall 412        │           │    │       │ │
│   │       ▼                          │           │    │       │ │
│   │   ┌──────────────────────────────────────┐  │    │       │ │
│   │   │           KERNEL SPACE                │  │    │       │ │
│   │   │              410                      │  │    │       │ │
│   │   └──────────────────────────────────────┘  │    │       │ │
│   └ ─ ─ ─ ─ ─ ─ ─ ─ ─ ─ ─ ─ ─ ─ ─ ─ ─ ─ ─ ─ ─ ┘    └───────┘ │
│                                                               │
└─────────────────────────────────────────────────────────────┘
```

EP 4 359 954 B1

# FIG.4B

User Applications (USER SPACE) 408

Program 1 408a

Program N 408b

402

414

BLOCKCHAIN

Sys_call()

Operating System (KERNEL SPACE) 410

Common Runtime/ Unikernel 410a

Hardware Abstraction Layer 410b

400b

EP 4 359 954 B1

# FIG.5A

500

| DOWNLOADING MOST RECENT BLOCK FROM A BLOCKCHAIN NETWORK | 502 |

| AUTHENTICATING AN UPDATE OPERATION  BASED ON THE DOWNLOADED MOST RECENT BLOCK | 504 |

| GENERATE A RESPONSE FOR CONTROLLING AN OPERATION  BASED ON THE AUTHENTICATION | 506 |

EP 4 359 954 B1

# FIG.5B

504

TRANSMITTING DEVICE STATE DATA IN THE INCOMING COMMAND, FROM ONE OR MORE INDUSTRIAL DEVICES TO THE AT LEAST ONE CONTROLLER COMPUTER

504a

AUTHENTICATING THE INCOMING COMMAND OF AT LEAST ONE CONTROLLER COMPUTER BASED ON THE DOWNLOADED MOST RECENT BLOCK, WHEREIN THE DOWNLOADED MOST RECENT BLOCK COMPRISES DATA ASSOCIATED WITH A SET OF VALID COMMANDS FOR THE ONE OR MORE INDUSTRIAL DEVICES, AND WHEREIN THE INCOMING COMMAND IS AUTHENTICATED FOR EXECUTION WHEN THE INCOMING COMMAND IS INCLUDED IN THE SET OF VALID COMMANDS

504b

FIG.5C

506

TRANSMITTING A CONTROL INSTRUCTION FROM THE AT LEAST ONE CONTROLLER COMPUTER TO THE ONE OR MORE INDUSTRIAL DEVICES

506a

MODIFY THE DEVICE STATE DATA OF THE ONE OR MORE INDUSTRIAL DEVICES BASED ON THE CONTROL INSTRUCTION

506b

EP 4 359 954 B1

## FIG.6

Factory Automation Blockchain Network

608

600

606

PLC | BlockchainCommon RunTime 606a

604

MACHINE 1

602

# FIG.7

700

710

Factory Automation
Blockchain Network

720

708

VERIFICATION CONTRACT

718

706

| PLC | BlockchainCommon RunTime 706a |

716    712

704    702

INDUSTRIAL
DEVICE

714    PRODUCT

38

EP 4 359 954 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BOZIC, NIKOLA**. *Blockchain technologies and their application to secure virtualized infrastructure control*, 18 October 2019

- **FERNANDO, PRAVEEN**. Blockchain-Powered Software Defined Network-Enabled Networking Infrastructure for Cloud Management. *Annual Consumer Communications & Networking Conference*, 10 January 2020